(19) Europäisches Patentamt / European Patent Office / Office européen des brevets

(11) **EP 4 159 430 A1**

(12) **EUROPEAN PATENT APPLICATION**
published in accordance with Art. 153(4) EPC

(43) Date of publication:
**05.04.2023 Bulletin 2023/14**

(21) Application number: **21818595.7**

(22) Date of filing: **02.06.2021**

(51) International Patent Classification (IPC):
**B32B 5/18** (2006.01)      **B32B 15/08** (2006.01)
**G10K 11/16** (2006.01)      **G10K 11/168** (2006.01)

(52) Cooperative Patent Classification (CPC):
**B32B 5/18; B32B 15/08; G10K 11/16;
G10K 11/168**

(86) International application number:
**PCT/JP2021/021092**

(87) International publication number:
**WO 2021/246463 (09.12.2021 Gazette 2021/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.06.2020 JP 2020096308**

(71) Applicant: **Asahi Kasei Kabushiki Kaisha
Tokyo 1000006 (JP)**

(72) Inventor: **KAWAZU Yasuyuki
Tokyo 100-0006 (JP)**

(74) Representative: **D Young & Co LLP
120 Holborn
London EC1N 2DY (GB)**

(54) **COMPOSITE MATERIAL LAMINATE**

(57)      An object of the present disclosure is to provide a composite material laminate excellent in impact resistance and vibration damping property. The present disclosure is a composite material laminate including a metal substrate, an adhesive layer formed on a surface of the metal substrate, and a foamed body layer formed on a surface of the adhesive layer, wherein a shear fracture strength (S) at an interface between the metal substrate and the adhesive layer is 1.0 MPa or more, and (S/F) determined by dividing the shear fracture strength (S) at the interface by a bending elastic modulus (F) of the foamed body layer is 0.007 or more and 0.5 or less.

EP 4 159 430 A1

**Description**

TECHNICAL FIELD

The present disclosure relates to a composite material laminate.

BACKGROUND

Vibration damping materials that reduce vibrations by converting energies of the vibrations into other types of energy have been used in a wide variety of technical fields, such as components of vehicles or electric devices, or structural materials of buildings or containers. Studied have been made daily to improve the vibration reduction performance (hereinafter referred to as "vibration damping property") of such vibration damping materials and reduce the weights of the vibration damping materials without incurring reduction in the mechanical properties. Typical examples of such vibration damping materials include a type of material in which a base polymer containing an inorganic filler such as calcium carbonate, a modifier, a fibrous material, and a plasticizer is bound by a steel sheet or a viscoelastic resin sheet, or a type of material in which a modified acrylic resin containing a filler and an additive is applied to a target article. For example, the techniques of PTLs 1 and 2 are cited as examples of the former type. PTL 1 discloses a laminate of a fiber reinforced resin (FRP), a resin foamed body layer, and a member made of a metal. Further, PTL 2 discloses a method in which a polymer steel sheet having a foamable material adhered to the surface of the steel sheet is formed, and the polymer steel sheet is then heated to cause the foamable material to foam, to thereby simultaneously achieve formation of a foamed body layer and bonding of the steel sheet with the foamed body layer.

CITATION LIST

Patent Literature

PTL 1: JP 2016-70389 A
PTL 2: JP H09-164541 A

SUMMARY

(Technical Problem)

In the technique of PTL 1, because the laminate of the different layers is used as a vibration damping material that is exposed to an environment of continues vibrations, there is always the problem in that the different layers peel off from each other, resulting in reduction in the mechanical strength and the vibration damping property. Further, in the technique of PTL 2, the production efficiency and reduction in defects, such as collapse and tear, of the foamed body layer of the vibration damping polymer steel sheet including the foamed body layer are taken into consideration. However, improvement in the mechanical strength of the foamed body layer per se, the physical properties such as the impact resistance, and the vibration damping property have not taken into consideration at all.

Accordingly, it would be therefore helpful to provide a composite material laminate excellent in impact resistance and vibration damping property.

(Solution to Problem)

In view of the above problem, the present inventor has found through diligent studies and repeated experiments that the above problem can be solved by using a foamed body layer having an elastic modulus within a specific range and a heat dimensional stability within a specific range, thereby completing the present disclosure. Specifically, the present disclosure is as follows:

[1] The present disclosure is a composite material laminate comprising:

a metal substrate, an adhesive layer formed on a surface of the metal substrate, and a foamed body layer formed on a surface of the adhesive layer,
wherein a shear fracture strength (S) at an interface between the metal substrate and the adhesive layer is 1.0 MPa or more, and (S/F) determined by dividing the shear fracture strength (S) at the interface by a bending elastic modulus (F) of the foamed body layer is 0.007 or more and 0.5 or less.

[2] In the present embodiment, it is preferable that a compressive strength upon a 75% compression at a temperature which is lower than a melting point (Tm) or a glass transition temperature (Tg) of the foamed body layer by 20 °C is 0.3 MPa or more.

[3] In the present embodiment, it is preferable that a loss factor between 50 and 2000 Hz in a measurement using a central excitation method at room temperature (23 °C) is 0.05 or more, and a loss factor in a measurement using the central excitation method at 80 °C is 1.2 times or more the loss factor at room temperature within the range of 50 to 2000 Hz.

[4] In the present embodiment, it is preferable that an elongation of the foamed body layer in a tensile fracture measurement is 10% or more.

[5] In the present embodiment, it is preferable that a surface roughness (Rz) of the metal substrate on a surface of the metal substrate in contact with the adhesive layer is 0.5 $\mu$m or more and 300 $\mu$m or less.

[6] In the present embodiment, it is preferable that a bending elastic modulus of the foamed body layers is 20 to 2000 MPa.

[7] In the present embodiment, it is preferable that an elongation of the foamed body layer in a tensile fracture measurement is 10% or more.

[8] In the present embodiment, it is preferable that the bending elastic modulus of the foamed body layers is 20 to 2000 MPa, and

a heat dimensional stability (x) of the foamed body layer represented by the following expression (I) is less than 3%:

$$\text{Heat dimensional stability} = \frac{L_1 - L_0}{L_0} \times 100 \qquad (I)$$

(in the above Expression (I), $L_1$ represents an average thickness ($\mu$m) of the foamed body layer after the foamed body layer is allowed to stand for 30 minutes in an atmosphere of 140 °C, and $L_0$ represents an average thickness ($\mu$m) of the foamed body layer before the foamed body layer is allowed to stand for 30 minutes in the atmosphere of 140 °C).

[9] In the present embodiment, it is preferable that the foamed body layer contains a polyamide resin foamed body.

[10] In the present embodiment, it is preferable that the foamed body layer contains a polyamide resin foamed body and a metal compound, and the metal compound is contained in a total amount of 0.5 to 10 mass % with respect to the total amount of the foamed body layer.

[11] In the surface embodiment, it is preferable that an opening having an average diameter of 1 mm or more and 3 mm or less is provided at the surface of the foamed body layer.

[12] In the present embodiment, it is preferable that a difference in a transmission loss at 1000 Hz represented by the following expression (2) is 2 db or more:

(Expression 2)

the transmission loss of the composite material laminate (B) as a whole

- the transmission loss of the metal substrate used in the composite material laminate (A).

[13] In the present embodiment, it is preferable that a first molten resin layer in which a first resin is molten at the surface of the foamed body layer is further provided.

[14] In the present embodiment, it is preferable that the adhesive layer is the molten foamed body layer in which a part of the foamed body layer is molten.

(Advantageous Effect)

According to the present disclosure, a composite material laminate excellent in impact resistance and vibration damping property can be provided.

BRIEF DESCRIPTION OF THE DRAWINGS

In the accompanying drawings:

FIG. 1 is a perspective view illustrating one example of a composite material laminate of a present embodiment;
FIG. 2 is a perspective view illustrating another example of a composite material laminate of the present embodiment;
FIGS 3 illustrate an enlarged view of the foamed body layer 2 of the composite material laminate 1 of FIG. 2, wherein FIG. 3A and FIG. 3B illustrate closed cell structures of the foamed body layer 2, and FIG. 3C and FIG. 3D illustrate open cell structures of the foamed body layer 2;
FIG. 4 is a schematic diagram illustrating a test specimen used for a measurement of the shear fracture strength (S) at the interface description in Examples;
FIG. 5 is a schematic diagram illustrating a test specimen used for a measurement of an impact compression test described in Examples, wherein a left diagram of FIG. 5 illustrates a composite test specimen (100 mm in length) of a metal substrate 4 / a foamed body layer 2, and a right diagram of FIG. 5 illustrates a dimensional cross-sectional view of the metal substrate 4 in the composite test specimen (100 mm in length);
FIG. 6 is a schematic diagram illustrating a procedure of an impact compression test described in Examples; and
FIG. 7 is a schematic diagram illustrating an example of a method of producing a composite material laminate according to an embodiment.

DETAILED DESCRIPTION

The following provides a detailed description of an embodiment of the present disclosure (hereinafter, referred to as the "present embodiment"). This disclosure is not limited to the following description, but may be practiced in a wide variety of variations within the scope of the subject thereof. Note that, in a present embodiment, the expression "A (value) to B (value)" means A or more and B or less.

A composite material laminate of a present embodiment includes a metal substrate, an adhesive layer formed on a surface of the metal substrate, and a foamed body layer formed on a surface of the adhesive layer. The shear fracture strength (S) at an interface between the metal substrate and the adhesive layer is 1.0 MPa or more. Further, (S/F) determined by dividing the shear fracture strength (S) at the interface by the bending elastic modulus (F) of the foamed body layer is 0.007 or more and 0.5 or less.

When the metal substrate, the adhesive layer, and the foamed body layer are laminated in this order, and the shear fracture strength (S) at the interface and the ratio (S/F) of the bending elastic modulus of the foamed body layer to the shear fracture strength of the interface are set to fall within certain ranges, the composite material laminate as a whole exhibits excellent impact resistance and vibration damping properties.

In the present embodiment, the shear fracture strength (S) at the interface between the metal substrate and the adhesive layer is 1.0 MPa or more. The lower limit of the shear fracture strength (S) at the interface between the metal substrate and the adhesive layer is preferably 1.5 MPa or more, more preferably 2.0 MPa or more, and even more preferably 2.5 MPa or more. On the other hand, the upper limit of the shear fracture strength (S) at the interface between the metal substrate and the adhesive layer is preferably 30 MPa or less, more preferably 20 MPa or less, and even more preferably 15 MPa or less. A preferable range of the shear fracture strength (S) at the interface between the metal substrate and the adhesive layer can be set by arbitrarily combining the lower limits and the upper limits described above.

When the shear fracture strength (S) at the interface between the metal substrate and the adhesive layer is 1.0 MPa or more, the adhesiveness can be maintained in an environment that is exposed to an environment under vibrations, and strains induced by expansions and contractions of the metal substrate due to changes in the high humidity and high temperature environment can be absorbed.

The upper limit of the shear fracture strength (S) at the interface between the metal substrate and the adhesive layer is even more preferably 30 MPa or less, and particularly preferably 23 MPa or less.

The corresponding method described in the Examples section applies mutatis mutandis to the method for measuring the shear fracture strength (S) at the interface between the metal substrate and the adhesive layer.

In the present embodiment, (S/F) determined by dividing the shear fracture strength (S) at the interface by the bending elastic modulus (F) of the foamed body layer is 0.007 or more and 0.5 or less. The lower limit of (S/F) determined by dividing the shear fracture strength (S) at the interface by the bending elastic modulus (F) of the foamed body layer is preferably 0.008 or more, more preferably 0.01 or more, and even more preferably 0.012 or more. On the other hand, the upper limit of (S/F) determined by dividing the shear fracture strength (S) at the interface by the bending elastic modulus (F) of the foamed body layer is preferably 0.4 or less, more preferably 0.3 or less, and even more preferably 0.2 or less. A preferable range of (S/F) determined by dividing the shear fracture strength (S) at the interface by the bending elastic modulus (F) of the foamed body layer can be set by arbitrary combining the lower limits and the upper limits described above.

When (S/F) determined by dividing the shear fracture strength (S) at the interface by the bending elastic modulus (F) of the foamed body layer of 0.007 or more, the foamed body (layer) does not peel off, and deformation of the metal can be reduced and the viscoelastic properties of the foamed body (layer) can dispose the energy in a wider area when the energy of an impact is applied to the composite material laminate. On the other hand, when the (S/F) is 0.5 or less, the vibration damping effect is sufficiently exhibited by the rigidity of the foamed body (layer) when the energy of an impact is applied, and transfer of the energy caused by vibrations of the metal can be suppressed and the energy is transferred from the metal to the foamed body, which increases the absorption efficiency.

In addition, when the shear fracture strength (S) at the interface is high, the stress is concentrated if an object having a sharp shape gives an impact, so that the foamed body layer is likely to be fractured and thus the energy absorbing property is lowered. For this reason, the metal substrate and the adhesive layer preferably have an appropriate adhesive force. In particular, S/F is preferably 0.5 or less.

The corresponding method described in the Examples section applies mutatis mutandis to the method of calculating (S/F) determined by dividing the shear fracture strength (S) at the interface by the bending elastic modulus (F) of the foamed body layer.

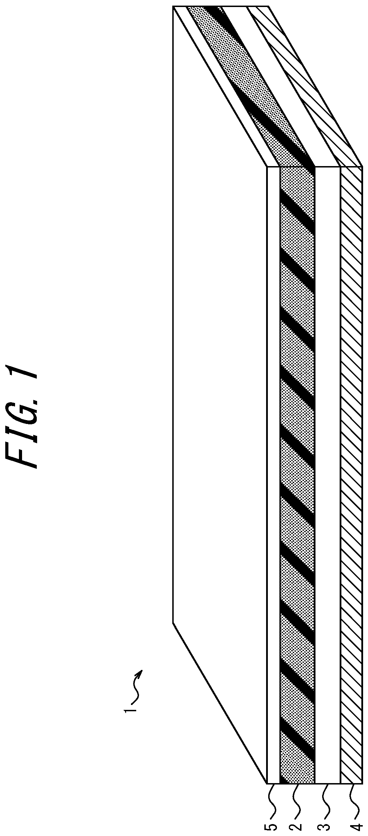

A composite material laminate of the present embodiment will be described below with reference to the drawings. As illustrated in FIG. 1, the composite material laminate 1 is a laminate having a metal substrate 4, an adhesive layer 3 provided on one surface of the metal substrate 4, and a foamed body layer 2 provided on one surface of the adhesive layer 3. Further, a preferred form of the composite material laminate 1 in which a resin molten layer 5, which is an optional element to be described later, is provided on the surface of the foamed body layer 2 is illustrated in FIG. 1.

The thickness of the composite material laminate 1 in the present embodiment is preferably 2 to 100 mm, more preferably 5 to 80 mm. The thickness of the composite material laminate 1 is calculated by the method described in Examples to be described later.

Hereinafter, preferred properties of the composite material laminate 1 of the present embodiment will be described, and the foamed body layer 2, the adhesive layer 3, and the metal substrate 4, which are constituent elements of the composite material laminate 1 of the present embodiment, will then be described.

"Preferred properties of composite material laminate"

In the present embodiment, the compressive strength of the composite material laminate 1 upon a 75% compression at a temperature which is lower than the melting point (Tm) or the glass transition temperature (Tg) of the foamed body layer 2 by 20 °C is preferably 0.3 MPa or more, more preferably 0.35 MPa or more and 5 MPa or less, and even more preferably 0.4 MPa or more and 3 MPa or less.

A measurement of the compressive strength upon a 75% compression of the composite material laminate 1 of the present embodiment at a temperature which is lower than the melting point (Tm) or the glass transition temperature (Tg) of the foamed body layer 2 by 20 °C [Tm (°C) or Tg(°C) - 20 °C], is preferable from the viewpoint that the effect of applying a load to the adhesive layer 3 by a compressive deformation of the foamed body layer 2 adjacent to the adhesive layer 3 can be quantitatively determined, even when the surface of the foamed body is heated directly by means of heat transfer from the metal substrate 4 side, or indirectly by means of infrared radiation or the like in a pretreatment of the bonding step, and a sufficient load is applied from the metal substrate 4 side or the foamed body layer 2 side in the subsequent bonding step. A compressive strength at a 75% compression of the composite material laminate 1 of the present embodiment of 0.3 MPa or more is preferable from the viewpoint that generation of voids is suppressed and penetration of the resin into the irregularities is promoted during formation of the adhesive layer 3. Further, when the compressive strength is 0.3 MPa or more, the shear fracture strength (S) at the interface between the metal substrate 4 and the adhesive layer 3 and (S/F) determined by dividing the shear fracture strength (S) at the interface by the bending elastic modulus (F) of the foamed body layer 2 can be easily controlled to fall within certain ranges.

Note that, specifically, the temperature which is lower than the melting point (Tm) or the glass transition temperature (Tg) of the foamed body layer 2 by 20 °C [Tm (°C) or Tg(°C) - 20 °C] is preferably 40 to 300 °C, and more preferably 100 to 250 °C.

The corresponding method described in the Examples section applies mutatis mutandis to the method for measuring the compressive strength of the composite material laminate 1 at a 75% compression.

In the present embodiment, the loss factor ($\eta_{23}$) between 50 and 2000 Hz in a measurement using the central excitation method at room temperature (23 °C) is preferably 0.05 or more, more preferably 0.06 to 0.5. A loss factor ($\eta_{23}$) of 0.05 or more is preferable from the viewpoint that, when the energy of an impact is applied to the composite material laminate 1, the viscoelastic properties of the foamed body (layer) can suppress transmission of energy due to vibrations of the metal (substrate) and disperse the energy in a wider area. The problem in that the energy is propagated to a bonding portion for fixing the composite material laminate 1 or the like due to the transfer of the energy due to vibrations of the metal (substrate), resulting in peeling-off, can be suppressed.

In the present embodiment, the loss factor ($\eta_{80}$) in a measurement using the central excitation method at 80 °C is preferably 1.2 times or more, more preferably 1.3 to 10 times the loss factor ($\eta_{23}$) at room temperature (23 °C) within the range of 50 to 2000 Hz.

When the loss factor of the composite material laminate 1 of the present embodiment between 50 and 2000 Hz in a measurement using the central excitation method at room temperature (23 °C) ($\eta_{23}$) is 0.05 or more and the loss factor in a measurement using the central excitation method at 80 °C ($\eta_{80}$) is 1.2 times or more the loss factor ($\eta_{23}$) at room temperature (23 °C) within the range of 50 to 2000 Hz, the material can be ensured to be more excellent in the vibration damping property with which vibrations are quickly damped.

In the present embodiment, the loss factor ($\eta_{80}$) between 50 and 2000 Hz in a measurement using the central excitation method at 80 °C is preferably 0.06 to 0.6, and more preferably 0.072 to 0.5.

Note that the loss factor is calculated by the half-width method from the peak of the second-order resonance of the frequency-response function measured by the central excitation method in accordance with JIS K7391, as described in the Example section.

"Foamed body layer"

The composite material laminate 1 of the present embodiment includes a foamed body layer 2. The foamed body layer 2 in the present embodiment preferably has a bending elastic modulus of 20 to 2000 MPa and a heat dimensional stability of less than 3%.

The foamed body layer 2 in the present embodiment is preferably a closed-cell foam. A closed-cell foam is a foam formed by the method to foaming mold closed-cell beads. More specifically, a closed-cell foam has closed cells partitioned by a resin film, and is molded by the mechanism of mutual fusion of expanded particles caused by expansion of cells, so that the cell structure of the foam usually obtained is basically a closed-cell structure. Therefore, the sound insulation property due to the rigidity becomes more likely to be exhibited.

<Bending elastic modulus>

In the present embodiment, the bending elastic modulus of the foamed body layer 2 is preferably 20 to 2000 MPa, more preferably 25 to 1500 MPa, and even more preferably 30 to 1000 MPa.

When the bending elastic modulus of the foamed body layer 2 is 20 MPa or more, the loss factor in the frequency range of 50 to 1000 Hz at room temperature (23 °C) is increased due to the elastic property of the foamed body, and thus the vibration damping property can be achieved. On the other hand, when the elastic modulus of the foamed body layers is 2000 MPa or less, a sufficiently lightweight property can be ensured as the vibration damping material. Further, when the bending elastic modulus of the foamed body layer 2 is 20 to 2000 MPa, the shear fracture strength (S) at the interface and the ratio (S/F) of the shear fracture strength at the interface to the bending elastic modulus of the foamed body layer 2 tend to be easily controlled to fall within certain ranges.

In the present embodiment, the elastic modulus of the foamed body layer 2 can be evaluated by measuring the bending elastic modulus of the foamed body layer 2. A larger value for the bending elastic modulus signifies better rigidity. The bending elastic modulus of the foamed body layer 2 can be measured in accordance with JIS K7171 (2008). The bending elastic modulus of the foamed body layer 2 can be controlled by adjusting the expansion ratio of the foamed body forming the foamed body layer 2, the rigidity of the foam resin, and the like. Further, the bending rigidity of the foamed body layer 2 can also be adjusted by adjusting the thickness or the material of the foamed body layer 2.

<Heat dimensional stability>

In the present embodiment, the heat dimensional stability of the foamed body layer 2 is defined by the following general expression (I):

$$\text{Heat dimensional stability} = \frac{L_1 - L_0}{L_0} \times 100 \qquad (I)$$

(In the above Expression (I), $L_1$ represents the average thickness ($\mu$m) of the foamed body layer after the foamed body layer 2 is allowed to stand at 140 °C for 30 minutes, and $L_0$ represents the average thickness ($\mu$m) of the foamed body layer 2 before the foamed body layer 2 is allowed to stand at 140 °C for 30 minutes.) The heat dimensional stability of the foamed body layer 2 refers to the displacement ratio (%) of the average thickness of the foamed body layer before and after heating under a certain condition, as represented by the general expression (I). When the heat dimensional stability of the foamed body layer 2 is less than 3%, the amount of deformation caused by heat conduction or radiant heat from a high-temperature object, or heat generated through conversion from vibrational energy under the actual use environment can be reduced. Thus, peeling off from the metal substrate 4 or the adhesive layer 3 can be suppressed.

In the present embodiment, the heat dimensional stability of the foamed body layer 2 represented by the general expression (I) is preferably less than 3%, more preferably less than 2%, even more preferably less than 1.5%, and particularly preferably less than 1%. The lower limit of the heat dimensional stability of the foamed body layer 2 is ideally 0%, but is actually 0.01% or more.

In the present embodiment, the heat dimensional stability of the foamed body layer 2 can be controlled to be less than 3% by adjusting the type of the resin forming the foamed body layer 2, the molecular weight of the resin, the closed cell ratio, or the formulation of the resin or the resin composition forming the foamed body layer 2, or the like. Further, the resin forming the foamed body layer 2 and the like are as described in the section of the composition of the foamed body layer 2 to be described later.

The methods for measuring the average thicknesses $L_0$ and $L_1$ of the foamed body layer 2 before and after heating at 140 °C for 30 minutes are the number average values obtained by measuring the foamed body layer 2 six times by a length measurement instrument such as a caliper.

The heat dimensional stability in the present disclosure is defined as the ratio of the average thickness under an atmosphere of 140 °C for the purpose of forming the uniform adhesive layer 3. Specifically, the performance of the adhesive composition which is a precursor of the adhesive layer 3 as an adhesive may vary due to the mixing state thereof or the like, and the impact resistance after a composite of the metal substrate 4 and the foamed body (layer) is formed would be remarkably reduced starting from a point where the reaction is insufficient. In order to prevent such an ununiformity of the reaction, in the present embodiment, the foamed body (layer) and the metal substrate are bonded to each other via an adhesive composition to be described later, which is cured under a relatively high temperature condition. Thus, it is considered that a uniform adhesive layer 3 can be formed under an atmosphere of 140 °C or higher, so that the foamed body layer 2 having excellent heat dimensional stability can be formed.

In the present embodiment, an elongation in a tensile fracture measurement of the foamed body layer 2 is preferably 10% or more, more preferably 12% or more and 80% or less, and even more preferably 15% or more and 50% or less.

An elongation in a tensile fracture measurement of the foamed body layer 2 of 10% or more is preferable from the viewpoint that, when the energy of an impact is applied to the composite material laminate 1, a fracture caused by bending deformation of the foamed body layer 2 can be suppressed and the shock absorbing property can be maintained even under a high strain. Further, when the elongation in a measurement of the tensile fracture of the foamed body layer 2 is set to 10% or more, the shear fracture strength (S) at the interface and the ratio (S/F) of the shear fracture strength at the interface to the bending elastic modulus of the foamed body layer 2 tend to be easily controlled within certain ranges.

<Thickness>

The thickness of the foamed body layer 2 in the present embodiment is preferably 2 to 100 mm, and more preferably 5 to 80 mm. As used therein, the thickness refers to the number average value of the thickness of the foamed body layer 2 in the composite material laminate 1 of the present embodiment and corresponds to $L_0$ (the average thickness ($\mu$m) of the foamed body layer 2 before it is allowed to stand for 30 minutes at 140 °C). In the present specification, the thickness refers to a number average value obtained by measuring the layer thickness of the foamed body layer six times by a length measurement instrument such as a caliper.

A thickness of the foamed body layer 2 of 2 mm or more is preferable in terms that this makes the foamed body layer 2 self-supporting and enables use thereof as a structural component, and a thickness of 5 mm or more is more preferable. Moreover, a thickness of the foamed body layer 2 of 80 mm or less is preferable in view of obtaining a molded article using a hot pressing machine or a foam molding machine.

<Average cell diameter>

In the present embodiment, the average cell diameter of the foamed body layer 2 is preferably 10 to 300 $\mu$m, more preferably in a range of 20 to 280 $\mu$m, and even more preferably in a range of 30 to 270 $\mu$m.

An average cell diameter of the foamed body layer 2 within the above range is preferable from the viewpoint that an impact absorption energy can be dispersed by the air layer in the closed cell and buckling of the closed cells can be suppressed. Further, when the average cell diameter of the foamed body layer 2 is within the above range, the shear fracture strength (S) at the interface between the metal substrate 4 and the adhesive layer 3 and (S/F) determined by dividing the shear fracture strength (S) at the interface by the bending elastic modulus (F) of the foamed body layer 2 become more easily controllable to certain ranges. The corresponding method described in the section of Examples is applied as the method for measuring the average cell diameter of the foamed body layer 2.

<Closed cell ratio>

In the present embodiment, the closed cell ratio of the foamed body layer 2 is not specifically limited, but is preferably not less than 30% and not more than 99%. When the closed cell ratio is within this range, elastic repulsive force during compression can be maintained, followability to a mold can be improved, and a design surface having high surface smoothness can be formed. The closed cell ratio of the foamed body layer 2 of the present embodiment is more preferably 80% or more and 99% or less, and even more preferably 85% or more and 99% or less in the viewpoint that the strength of the composite material laminate 1 is improved, uptake of water into resin that can occur in continuous cell sections is inhibited, and the density of the foamed body layer 2 tends not to decrease.

The closed cell ratio S (%) was calculated by a formula expressed by the following formula (1).

$$S\ (\%) = \{(Vx - W/\rho)/(Va - W/\rho)\} \times 100 \qquad \ldots (1)$$

In the above Expression (1), $Vx$ is the true volume ($cm^3$) of a foamed body layer 2, $Va$ is the apparent volume ($cm^3$) of the foamed body layer 2, $W$ is the weight (g) of the foamed body layer 2, and $\rho$ is the density (g/$cm^3$) of a resin of the foamed body layer 2.

The expansion ratio of foam particles forming the foamed body layer 2 of the present embodiment is preferably 3.0 times or more, and more preferably 5.0 times or more from a viewpoint of weight reduction. Moreover, the expansion ratio is preferably less than 30 times, and more preferably 20 times or less from a viewpoint that elastic repulsive force during compression can be maintained. Herein, the expansion ratio represents the degree of expansion of the volume of the expanded particles from a substrate resin state that occurs through inclusion (impregnation) of a blowing agent, preliminary foaming, and a final stage of foaming.

The expansion ratio of the expanded particles forming the foamed body layer 2 of the present embodiment can be calculated by dividing the density of the substrate resin (starting material) forming the foamed body layer 2 by the apparent density of a foamed body layer section. Alternatively, the expansion ratio may be calculated by dividing the density of the substrate resin by the apparent density of the foamed body layer 2 that is an intermediate product. This is because the expanded particles forming the foamed body layer 2 do not tend to be affected by pressurizing compression in a production process of the foamed body layer 2 due to the presence of expanded particles forming the foamed body layer 2, and thus the expansion ratio thereof directly before pressurizing compression can be maintained. The expansion ratio can, more specifically, be calculated by a method described in the EXAMPLES section to be described later.

<Formulation of foamed body layer>

The foamed body layer 2 of the present embodiment contains a first resin in the form of expanded particles. This first resin is preferably a thermoplastic resin.

The term "expanded particles" as used in this specification refers to particles that form a foamed body layer of the present embodiment and that are expanded particles that have undergone a final stage of foaming of pre-expanded particles.

Moreover, the term "pre-expanded particles" as used in this specification refers to expandable particles that have not undergone a final stage of foaming and is inclusive of a state from before implementation to after implementation of preliminary foaming that is not a final stage.

Examples of thermoplastic resins that can be used include, but are not specifically limited to, styrene-based polymers such as polyacetal, polystyrene, poly($\alpha$-methylstyrene), a styrene-maleic anhydride copolymer, a blend or graft polymer of polyphenylene oxide and polystyrene, an acrylonitrile-styrene copolymer, an acrylonitrile-butadiene-styrene polymer, a styrene-butadiene copolymer, and high-impact polystyrene; vinyl chloride-based polymers such as polyvinyl chloride, a vinyl chloride-vinyl acetate copolymer, chlorinated polyvinyl chloride, and a copolymer of ethylene or propylene with vinyl chloride; polyvinylidene chloride-based copolymer resins; homo- and copolymerization polyamide resins such as nylon-6 and nylon-6,6; homo- and copolymerization polyester-based resins such as polybutylene terephthalate or polyethylene terephthalate; polyether resins such as polyethersulfone or polyether ether ketone; modified polyphenylene ether resins (phenylene ether-polystyrene alloy resins); polycarbonate resins; imide resins such as polyamide-imide, polyimide, polyetherimide, and methacrylimide; polyphenylene sulfide resins; polysulfone resins; polyethersulfone resins; phenolic resins; urethane resins; polyolefin-based resins such as polypropylene or polymethylpentene; polyester resins; and fluorine-based resins such as polyvinylidene fluoride or polytetrafluoroethylene.

Examples of polyolefin-based resins that can be used include polypropylene-based resins such as polypropylene, an ethylene-propylene random copolymer, a propylene-butene random copolymer, an ethylene-propylene block copolymer, and an ethylene-propylene-butene terpolymer, and polyethylene-based resins such as low-density polyethylene, medium-density polyethylene, linear low-density polyethylene, linear ultra-low-density polyethylene, high-density polyethylene, an ethylene-vinyl acetate copolymer, an ethylene-methyl methacrylate copolymer, ionomer resins which are polymerized using a Ziegler catalyst, a metallocene catalyst, or the like, and one of these polyolefin-based resins are used alone or they are used in a mixture.

Examples of particularly preferable thermoplastic resins include polyolefin-based resins, polyamide resins, polyester resins, polyether resins, methacrylic resins, and modified polyether resins (phenylene ether-polystyrene alloy resins). Of these examples, a polyamide resin is an example of a resin that has excellent heat resistance, chemical resistance, and solvent resistance and is suitable for applications as a high heat resistance foam structural material, and a modified polyether resin (phenylene ether-polystyrene alloy resin) is an example of a resin having excellent heat resistance and high-temperature rigidity.

The surface tension of the thermoplastic resin at 20 °C is preferably than 35 mN/m or more and 60 mN/m or less, more preferably 36 mN/m or more and 57 mN/m or less, and even more preferably 37 mN/m or more and 55 mN/m or less. When the surface tension of the thermoplastic resin is within any of the ranges set forth above, a foam molded product having high mechanical strength is obtained, and a design surface can be provided with rigidity.

The surface tension of the thermoplastic resin is a value measured by changing the measurement temperature to 20 °C in the method described in JIS K6768: 1999 (Plastics - Film and sheeting - Determination of wetting tension).

The thermoplastic resin may be used in a non-crosslinked state or may be used after crosslinking using a peroxide, radiation, or the like.

The foamed body layer in the present embodiment preferably contains 50 to 99 mass%, more preferably 70 to 95 mass%, and even more preferably 80 to 90 mass% of a thermoplastic resin, with respect to the total amount (taken to be 100 mass%) of the foamed body layer 2.

In the present embodiment, the first resin is preferably a polyamide resin. In other words, the foamed body layer 2 in the present embodiment preferably contains a polyamide resin in the form of expanded particles, and the foamed body layer 2 more preferably contains a polyamide resin foamed body. This makes it easier to achieve a desired elastic modulus without using continuous fibers in the composite material laminate of the present embodiment. In addition, usage of a polyamide resin for the foamed body layer 2 can ensure heat resistance and can shorten the curing time. Further, usage of a polyamide resin for the foamed body layer 2 further improves the adhesive strength with the adhesive layer 3. In particular, when a polyamide resin is used for the foamed body layer 2 and an epoxy resin is used for the adhesive layer 3, the compatibility between the resins is improved, so that an excellent adhesive strength and stable impact resistance and vibration damping property are more likely to be exhibited.

Examples of the polyamide resin that can be used include a homopolymer alone, a copolymer alone, a mixture of homopolymers, a mixture of copolymers, a mixture of a copolymer and a homopolymer obtained by appropriately combining monomers which can form a polyamide such as ε-caprolactam, adipic acid, sebacic acid, dodecanedioic acid, isophthalic acid, terephthalic acid, hexamethylenediamine, tetramethylenediamine, 2,2,4-trimethyl hexamethylenediamine, 2,4,4-trimethyl hexamethylenediamine, metaxylylenediamine, and bis(3-methyl-4 aminocyclohexyl)methane, for example.

Specific examples of the polyamide resin include polycaproamide (nylon 6), polyhexamethylene adipamide (nylon 66), polytetramethylene adipamide (nylon 46), polytetramethylene sebacamid (nylon 410), polypentamethylene adipamide (nylon 56), polypentamethylene sebacamide (nylon 510), polyhexamethylene sebacamide (nylon 610), polyhexamethylene dodecamide (nylon 612), polydecamethylene adipamide (nylon 106), polydecamethylene sebacamide (nylon 1010), polydecamethylene dodecamide (nylon 1012), polyundecanamide (nylon 11), polydodecanamide (nylon 12), polycaproamide / polyhexamethylene adipamide copolymer (nylon 6/66), polycaproamide / polyhexamethylene terephthalamide copolymer (nylon 6/6T), polyhexamethylene adipamide / polyhexamethylene terephthalamide copolymer (nylon 66/6T), polyhexamethylene adipamide / polyhexamethylene isophthalamide copolymer (nylon 66/6I), and polyhexamethylene adipamide / polyhexamethylene isophthalamide / polycaproamide copolymer (nylon 66/6I/6). Here, "/" used above represents a copolymer. Further, in the present embodiment, one polyamide resin may be used alone, or two or more polyamide resins may be used in a mixture. In addition, the foamed body layer may be composed only of a polyamide resin foamed body.

The foamed body layer 2 in the present embodiment preferably contains a polyamide resin in an amount of 50 to 99 mass%, more preferably 70 to 95 mass%, and even more preferably 80 to 90 mass%, with respect to the total amount (taken to be 100 mass%) of the foamed body layer 2.

The foamed body layer 2 in the present embodiment preferably contains a thermoplastic resin and a metal compound, and more preferably contains a polyamide resin and a metal compound. When the foamed body layer contains a metal compound, the adhesive strength with the adhesive material which will be described later is increased. In particular, when a polyamide resin which is a thermoplastic resin and a metal compound are used in combination, a synergistic effect of suppression of a hydrolysis reaction caused by trapping of radicals is achieved.

In the present embodiment, the metal compound is preferably contained in a total amount of 0.2 to 10 mass%, the metal compound is more preferably contained in a total amount of 0.5 to 8 mass%, and the metal compound is even more preferably contained in a total amount of 0.8 to 7.5 mass%, with respect to the total amount (taken to be 100 mass%) of the foamed body layer 2. When the metal compound is contained in a total amount of 0.2 to 10 mass% in the foamed body layer, the effect of increasing the adhesive strength with the adhesive material is more likely to be exhibited.

Examples of the metal compound include a metal and a metal oxide. Examples of the metal include, for example, silver, gold, calcium, potassium, iron, various iron and steel materials, copper, nickel, neodymium, titanium, zinc, niobium, manganese, chromium, tin, silicon, aluminum, and alloys thereof.

Examples of the metal oxide include oxides of the above metals. Specifically, silver oxide, calcium oxide, magnesium oxide (including talc), potassium oxide, iron oxide, copper oxide, nickel oxide, neodymium oxide, titanium oxide, zinc oxide, niobium oxide, manganese oxide, chromium oxide, tin oxide, silicon oxide (including silica and fused silica), and aluminum oxide are preferable. The metal or metal oxide may be surface-modified by a known method. Note that one metal compound may be used alone, or two or more metal compounds may be used in a mixture in the present embodiment.

The foamed body layer 2 in the present embodiment may further contain a blended agent, if necessary, in addition to the first resin which is an essential component and the metal compound which is an optional component.

Other than the above-described metal compounds, examples of the blended agent include an antioxidant, a light stabilizer, an ultraviolet absorber, a flame retardant, a cell modifier, a blowing agent, a colorant such as a dye or a pigment, a plasticizer, a lubricant, a crystallization nucleating agent, and an inorganic filler such as calcium carbonate. Note that one blended agent may be used alone, or two or more blended agents may be used in a mixture in the present embodiment.

Examples of flame retardants that can be used include flame retardants based on bromine and phosphorus. Examples of antioxidants that can be used include antioxidants based on phenol, phosphorus, and sulfur. Examples of light stabilizers that can be used include light stabilizers based on hindered amines and benzophenone.

In addition, in the present embodiment, when adjustment of the average cell diameter of the pre-expanded particles is required upon formation of the foamed body layer 2, a cell modifier may be contained. The cell modifier may be talc, silica, calcium silicate, calcium carbonate, aluminum oxide, titanium oxide, diatomaceous earth, clay, sodium bicarbonate, alumina, barium sulfate, aluminum oxide, bentonite, or the like, and the amount thereof that is used is normally 0.005 parts by mass to 2 parts by mass per 100 parts by mass of the total amount of raw material of the pre-expanded particles.

The pre-expanded particles can be obtained by causing inclusion (impregnation) of a blowing agent in the above-described first resin (e.g., thermoplastic resin) that has been pelletized and then causing foaming to occur. This foaming is preliminary foaming rather than a final stage of foaming.

The blowing agent that is used in production of the pre-expanded particles may be a volatile blowing agent or the like. Examples of volatile blowing agents that can be used include chain or cyclic lower aliphatic hydrocarbons such as methane, ethane, propane, butane, isobutane, pentane, isopentane, neopentane, hexane, heptane, cyclopentane, cyclohexane, and methylcyclopentane; halogenated hydrocarbons such as dicyclodifluoromethane, trichloromonofluoromethane, 1-chloro-1,1-difluoroethane, and 1-chloro-2,2,2-trifluoroethane; and blowing agents based on inorganic gases such as nitrogen, air, and carbon dioxide.

The amount of the blended agent in the foamed body layer 2 in the present embodiment can be appropriately selected within a range that does not hinder the effects of the present disclosure.

The foamed body layer 2 in the present embodiment is preferably formed of a first resin composition containing the first resin and a blended agent which is an optional component such as a metal compound. In addition, if necessary, an aqueous solvent such as water (which may contain a salt or a dispersant) or a solvent such as an alcohol solvent may be added to the first resin composition so that the foaming agent is impregnated into the expanded particles containing the first resin.

The preferred formulation of the first resin composition may be adjusted so as to have the formulation ratio of the foamed body layer described above. Specifically, 80 to 99 mass% of the first resin, 0.5 to 10 mass% of the metal compound, preferably 0 to 10 mass% of the blended agent are preferably contained, and 85 to 99 mass% of the first resin, 1 to 7.5 mass% of the metal compound, 0 to 50 mass% of the solvent, and 0 to 7.5 mass% of the blended agent are more preferably contained, with respect to the total amount (taken to be 100 mass%) of the first resin composition.

The average particle diameter of the pre-expanded particles can be measured by measuring 100 g of the pre-expanded particles by a classification method using standard sieves prescribed by JIS Z8801-1:2006. The average particle diameter of the pre-expanded particles is preferably 1.0 mm to 4.0 mm, and more preferably 1.2 mm to 3.0 mm. An average particle diameter of less than 1.0 mm is undesirable because handling during production steps is difficult, whereas an average particle diameter of more than 4.0 mm is undesirable because the surface accuracy of a complicated shaped article tends to decrease. The shape of the pre-expanded particles according to the present embodiment may be any of various shapes without any specific limitations.

In the present embodiment, the production method of the pre-expanded particles can be (i) a method employing a thermoplastic resin as the first resin to thereby exploits the thermoplasticity thereof, or (ii) a method involving after processing such as machining of particles of the first resin in a solid state, and any method may be adopted so long as it is a method that makes it possible to impart a desired external shape to the particles. In particular, profile extrusion using a die provided with an ejection cross-section can suitably be used as a method that has excellent productivity and enables production of particles with a consistent shape. Production can be performed by freely adopting a method commonly known in the art as the profile extrusion method. Examples of such commonly known methods include a method in which the first resin (e.g., thermoplastic resin) is melt-extruded by an extruder and is pelletized by a method typically used in industry such as strand cutting or underwater cutting to obtain substrate resin pellets, and then the substrate resin pellets are caused to foam to obtain pre-expanded particles; a method in which a blowing agent is injected from partway along the barrel of an extruder so as to perform foaming concurrently with ejection, and then, after cooling, underwater cutting or strand cutting is performed to directly obtain pre-expanded particles; and a method in which a thermoplastic resin is molten inside an extruder, is extruded from a die having a desired cross-sectional shape, is cooled, and is subsequently cut to a certain length by a pelletizer to produce substrate resin pellets, and then the substrate resin pellets are impregnated with a blowing agent and are heated to cause foaming to a certain expansion ratio.

The method of inclusion (impregnation) of a blowing agent in the first resin is not specifically limited and may be a typically used method.

Examples of such methods include, but are not specifically limited to, a method performed using an aqueous medium in a suspension of water or the like (suspension impregnation), a method using a thermal decomposition-type blowing agent such as sodium bicarbonate (blowing agent decomposition), a method in which a gas is set as an atmosphere of equal or higher pressure than the critical pressure and is brought into contact with the substrate resin in a liquid phase state (liquid phase impregnation), and a method in which a gas is set as an atmosphere of lower pressure than the critical pressure and is brought into contact with the substrate resin in a gas phase state (gas phase impregnation).

- Shape of particles or pellets of substrate resin -

Any three-dimensional shape can be imparted to particles or pellets of the substrate resin serving as a raw material of the pre-expanded particles. Examples of such three-dimensional shapes include, but are not specifically limited to, a solid bead shape, a bead shape including a hollow part, and a bead shape including a recessed external part.

An orthographic projection of a particle or pellet of the substrate resin can have any shape. A typical solid bead shape is a substantially spherical shape having an orthographic projection that is a circular shape or an elliptical shape. The phrase "including a hollow part" means that an orthographic projection of the particle or pellet includes an internal hollow region while also including a peripheral region that surrounds the hollow circular region, and that there is a direction for which an orthographic projection including this hollow region and this peripheral region is obtained.

Moreover, the phrase "including a recessed external part" means that there is a direction for which the obtained orthographic projection of the particle or pellet is a recessed geometric shape. The term "recessed geometric shape" as used in the present specification means that it is possible to select two points on the outer surface of an orthographic projection geometric shape that is a recessed geometric shape such that at least part of a line segment linking these points (preferably the whole line segment) is a line segment passing through a region external to the particle or pellet. Note that the recessed external part is a different structure to foam cells formed during foaming. One recessed external part may be present or a plurality of recessed external parts may be present.

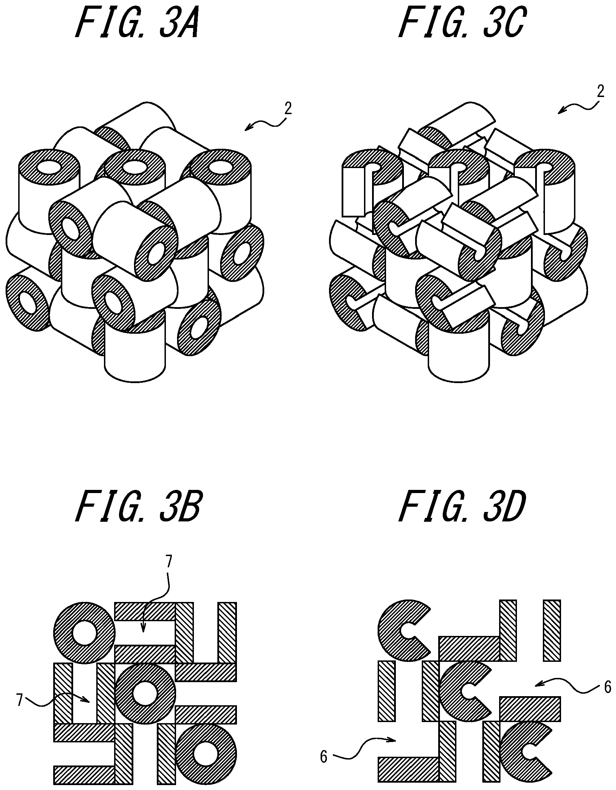

In the present embodiment, when beads in a solid bead shape or a bead shape having a hollow part are used as the particles or pellets of the substrate resin, for example, closed cell structures of FIGS. 3A and 3B to be described later are more likely to be formed. On the other hand, when beads in a bead shape having a recessed external part are used as particles or pellets of the substrate resin, for example, communicating cell structures of FIG. 3C and FIG. 3D to be described later are more likely to be formed.

A preferred foamed body layer 2 of the present embodiment contains a polyamide resin foamed body and a metal compound, and contains the metal compound in a total amount of 0.5 to 10 mass % with respect to the total amount of the foamed body layer.

This provides an effect of enhancing the adhesive strength with the following adhesive material. In particular, when a polyamide resin which is a thermoplastic resin and a metal compound are used in combination, a synergistic effect that a hydrolysis reaction caused by trapping of radicals can be suppressed is achieved.

"Resin molten layer"

In the present embodiment, it is preferable that the surface of the foamed body layer 2 further include a molten resin layer 5. In other words, the composite material laminate 1 of the present embodiment is preferably a laminate in which the metal substrate 4, the adhesive layer 3, the foamed body layer 2, and the resin molten layer 5 are laminated in this order. The resin molten layer 5 is defined as a layer in which a closed cell structure of expanded particles has been eliminated through melting.

As described above, in the case where the metal substrate 4 is disposed on the inner side, it is essential that the composite material laminate 1 according to the present disclosure has a configuration in which the foamed body layer 2 is formed on the outer side, and the metal substrate 4, the adhesive layer 3, and the foamed body layer 2 are laminated in this order. The molten resin layer 5 is a layer in which (expanded particles containing the first resin present on) the outermost surface portion of the foamed body layer 2 is thermally molten. As a result, the closed cell structure of the expanded particles inside the resin molten layer 5 containing the first resin (e.g., thermoplastic resin) is eliminated and is filled with the first resin.

Formation of the resin molten layer 5 on the surface of the composite material laminate 1 of the present embodiment can improve the impact resistance and the scratch resistance. More specifically, the effect of the transmission loss achieved by vibrations of the resin molten layer 5 is absorbed and attenuated by the foamed body because the sound insulating performance between 200 to 5000 Hz has the effect of the transmission loss achieved by provision of the layers having different elastic modulus, i.e., the resin molten layer 5 and the foamed body layer 2 at the same time, in addition to the transmission loss obtained by the common mass law.

In the present embodiment, the layer thickness of the resin molten layer 5 is not specifically limited but is preferably 0.1 mm or more from a viewpoint of making mechanical properties to be exhibited. An impact resistance can be exhibited when the thickness is 0.1 mm or more. Moreover, the resin molten layer 5 is preferably thick from a viewpoint of the bending strength and the compressive strength, but is preferably 5 mm or less from a viewpoint of weight reduction of the composite material laminate 1.

Note that the layer thickness of the resin molten layer 5 is calculated by the method described in Examples to be described later.

In the present embodiment, the durometer hardness of the resin molten layer 5 is preferably HDA 90 or more, and more preferably HDA 92 or more. In the present embodiment, a sufficient scratch resistance is not obtained if the durometer hardness of the resin molten layer 5 falls below these ranges.

The durometer hardness of the resin molten layer 5 in the present embodiment is a value measured within 1 second from application of pressure by a load of 1 kgf in accordance with JIS K7215: 1986 against an upper surface of the resin molten layer 5, i.e., a design surface. The durometer hardness of the resin molten layer 5 is measured at 30 locations and the arithmetic mean of the measurements is taken to be the durometer hardness of the resin molten layer 5.

<Opening>

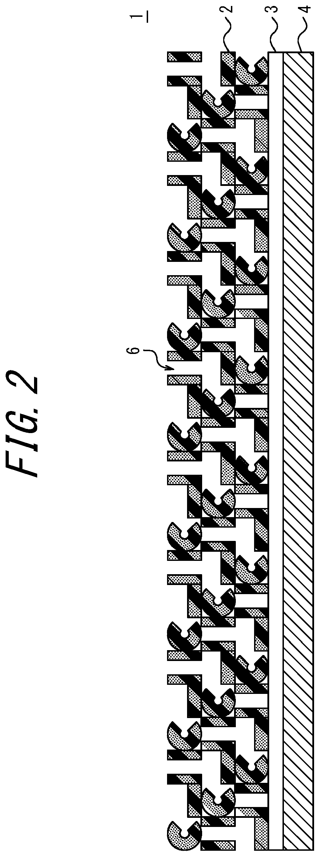

Openings with an average diameter of 0.1 mm or more and 3 mm or less are preferably provided at the surface of the composite material laminate 1 on the foamed body layer 2 side. Hereinafter, a preferred embodiment of the composite material laminate 1 will be described with reference to FIGS. 1 to 3. As illustrated in FIG. 1, the composite material laminate 1 is a laminate in which the metal substrate 4, the adhesive layer 3, and the foamed body layer 2 are laminated in this order. Further, as an example of a preferred form of the composite material laminate 1, FIG. 1 illustrates a form in which the resin molten layer 5, which is an optional component described above, is provided on the surface of the foamed body layer 2. In the present embodiment, a plurality of openings (not illustrated in FIG. 1) may be provided at the surface of the foamed body layer 2 (inside the resin molten layer 5 in the case where the resin molten layer 5 is formed) of the composite material laminate 1. FIG. 2 illustrates an example in which openings are provided at the surface of the composite material laminate 1 of FIG. 1. For convenience of explanation, FIG. 2 illustrates a cross-sectional view of a composite material laminate 1 provided with openings 6. The example of FIG. 2 illustrates a state in which the porous regions inside the foamed body layer 2 are exposed to the outside as the openings 6. FIG. 3 is an enlarged view of a portion of the foamed body layer 2 of the composite material laminate 1 illustrated in FIG. 2. FIG. 3A illustrates a porous structure (closed cell structure) in which pores in the foamed body of the foamed body layer 2 are closed. FIG. 3B illustrates a cross-sectional view of FIG. 3A, in which a large number of closed pores 7 in the foamed body of the foamed body layer 2 are present. On the other hand, FIG. 3C illustrates a porous structure (a communicating cell structure) in which pores in the foamed body of the foamed body layer 2 are in communication with each other. FIG. 3C illustrates a cross-sectional view of FIG. 3D, in which a plurality of pores in the foamed body in the foamed body layer 2 are in communication with each other.

In the present embodiment, the foamed body layer 2 preferably has a closed-cell structure as illustrated in FIG. 3A, 3B described above.

When the openings 6 are provided at the surface of the composite material laminate 1 on the foamed body layer 2 side, the porous regions inside the foamed body layer 2 are exposed to the outside, so that fluctuation of the pressure is directly propagated to the air in the cell portions in the porous regions. As a result, the viscous friction of the air is generated, which enables conversion of a part of the energy of a sound into a thermal energy, so that the vibration damping effect and the sound absorption effect are further improved.

In the present embodiment, the number of the openings 6 is not particularly limited, and can be appropriately set according to the purpose of use. For example, the number of the openings 6 is preferably 1 to 100, more preferably 10 to 50, per 25 cm$^2$ of the surface area on the foamed body layer 2 side in the composite material laminate 1.

The "average diameter" in the present specification refers to an arithmetic mean of the longest diameter ($d_{max}$) of an opening 6 and the diameter ($d_v$) vertical to the longest diameter relative to the center of the longest diameter.

In other words, the average diameter = $(d_{max} + d_v) / 2$.

Note that the average diameter of an opening 6 is calculated by the method described in Examples to be described later.

Further, in the case where the composite material laminate 1 of the present embodiment has the resin molten layer 5 on the surface thereof, openings 6 are preferably formed at the surface of the resin molten layer 5. On the contrary, in the case where the composite material laminate 1 of the present embodiment does not have the resin molten layer 5 on the surface, the openings 6 are preferably formed at the surface of the foamed body layer 2. Further, the depth in the thickness direction of openings 6 in the case where the resin molten layer 5 is provided on the surface may be such that the porous regions inside the foamed body layer 2 are exposed to the outside.

In the present embodiment, for example, the depth in the thickness direction of an opening 6 is preferably 0.01 to 2 mm, and more preferably 0.1 to 1 mm. Note that the depth in the thickness direction of an opening 6 is calculated by the method described in Examples to be described later.

"Metal substrate"

The composite material laminate of the present embodiment includes the metal substrate 4. The metal substrate 4 in the present embodiment is not particularly limited, and can be appropriately selected according to the application. For example, in cases where weight reduction is important, the material of the metal substrate is preferably an aluminum plate, an aluminum alloy plate, a magnesium plate, or a magnesium alloy plate, for example. In cases where the mechanical strength is important, the metal substrate 4 is preferably made of iron, iron and steel materials, stainless steel, copper, a copper alloy, manganese, a manganese alloy, titanium, or a titanium alloy. In cases where the vibration damping property is important, the metal substrate is preferably made of magnesium, a magnesium alloy, an iron-based alloy, a copper alloy, a manganese alloy, or the like. Further, the shape of the metal substrate 4 can be appropriately selected according to the purpose of use as long as the metal substrate 4 has a surface capable of being brought into a close contact with the adhesive layer 3 or the foamed body layer 2, and a so-called flat plate or curved plate and the like are exemplified.

The average thickness of the metal substrate 4 in the present embodiment is not particularly limited, but is preferably 0.2 mm or more, more preferably 0.5 to 3 mm, and even more preferably 0.7 to 2 mm, for example. If the average thickness of the metal substrate 4 is less than 0.2 mm, the mechanical strength becomes insufficient and production of a damping metal plate becomes difficult.

Note that the average thickness of the metal substrate 4 is calculated by the method described in Examples to be described later.

In the present embodiment, the surface of the metal substrate 4, particularly the surface to be brought into contact with the adhesive layer 3, may be subjected to surface treatment as necessary. Examples of such a surface treatment include sand blasting, polishing, degreasing, etching, a surface treatment by means of immersion in or spraying of a rust repellent, a chemical treatment with chromium, a chemical treatment with a phosphoric acid salt, a chemical treatment with a sulfide, film formation by anodic oxidation, or coating with a fluororesin.

Alternatively, in the present embodiment, a method of improving the affinity to the adhesive layer 3 or the foamed body layer 2 by oxidizing or etching the surface of the metal substrate 4 using a chemical agent such as an acid, an alkali, or an oxidizing agent, a method of improving the affinity to the adhesive layer 3 or the foamed body layer 2 by oxidizing or etching the surface of the metal substrate 4 with ozone, plasma, ultraviolet rays, or the like, or a method of improving the affinity to the adhesive layer 3 or the foamed body layer 2 by a primer treatment on the metal substrate 4 by silane, titanate, or the like may be applied.

In the present embodiment, the surface roughness (average maximum height (Rz) at 10 points, reference length 0.25 mm) of the surface of the metal substrate 4 which is the surface to be brought into contact with the adhesive layer 3, i.e., the adhesion surface of the metal substrate 4, is preferably 0.5 $\mu$m or more and 300 $\mu$m or less, preferably 0.5 to 150 $\mu$m, and more preferably 0.8 to 100 $\mu$m. A surface roughness of the metal substrate 4 on the adhesion surface side of the metal substrate 4 with the adhesive layer 3 of within any of the above ranges is preferable from the viewpoint that the adhesive layer 3 penetrates into the roughened surface to exert an anchoring effect, and generation of bubbles in the roughened surface is suppressed during an adhesion. Further, when the surface roughness of the adhesion surface of the metal substrate 4 is within any of the above range, the shear fracture strength (S) at the interface between the metal substrate 4 and the adhesive layer 3 and (S/F) determined by dividing the shear fracture strength (S) at the interface by the bending elastic modulus (F) of the foamed body layer 2 can be easily controlled to fall within certain ranges. Note that the method described in the section of Examples is used as the method of measuring the surface roughness of the adhesion surface of the metal substrate 4.

"Adhesive layer"

The composite material laminate 1 of the present embodiment includes the adhesive layer 3. The adhesive layer 3 in the present embodiment may be a layer for bonding the metal substrate 4 and the foamed body layer 2 together. The adhesive layer 3 can be appropriately selected according to the purpose or application. For example, the adhesive layer 3 can be formed using an adhesive composition containing any of various thermosetting resins, thermoplastic resins, rubber, or the like. Further, the molten foamed body layer in which a part of the foamed body layer 2 is molten may be used as the adhesive layer 3. More specifically, the composite material laminate 1 may be a laminate in which the foamed body layer 2 is directly laminated on the surface of the metal substrate 4, and the foamed body layer 2 in the vicinity of the surface of the metal substrate 4 is molten to form a molten foamed body layer. In this case, the adhesive layer 3 is used as the molten foamed body layer.

In the present embodiment, the thickness of the adhesive layer 3 is not particularly limited, but is preferably, for example, 0.01 to 2000 $\mu$m or more, more preferably 10 to 1000 $\mu$m, and even more preferably 50 to 500 $\mu$m. A thickness of the adhesive layer 3 in a range of 50 to 500 $\mu$m is preferable from the viewpoint of a desired adhesive strength, followability, and processability. Note that the average thickness of the adhesive layer 3 is calculated by the method described in Examples to be described later.

In the present embodiment, more specifically, examples of the adhesive used in the adhesive composition for forming the adhesive layer 3 include thermosetting resins such as epoxy-based resins, melamine-based resins, phenol-based resins, diallyl phthalate-based resins, bismaleimide triazine-based resins, unsaturated polyester-based resins, polyurethane-based resins, phenoxy-based resins, polyamide-based resins, polyimide-based resins, and cyanate-based resins; thermoplastic resins such as polyamide-based resins, polyester-based resins, polycarbonate-based resins, polyphenylene oxide-based resins, polyurethane-based resins, polyacetal-based resins, polyvinyl acetal-based resins, polyethylene-based resins, polypropylene-based resins, and polyvinyl-based resins; and rubbers and elastomers containing one or more functional groups such as hydroxyl groups, carboxyl groups, vinyl groups, amino groups, and epoxy groups. Among them, an epoxy resin is preferable as the adhesive. One of these adhesives may be used alone or two or more of these may be used in a mixture.

The adhesive composition in the present embodiment preferably contains an epoxy resin, and more preferably contains an epoxy resin and an epoxy resin curing agent.

Examples of the epoxy resin include an epoxy resin having a naphthalene skeleton, a bisphenol A type epoxy resin, a bisphenol F type epoxy resin, a phenol novolac type epoxy resin, an alicyclic epoxy resin, a siloxane type epoxy resin, a biphenyl type epoxy resin, a glycidyl ester type epoxy resin, a glycidyl amine type epoxy resin, and a hydantoin type epoxy resin. One of these epoxy resins may be used alone, or two or more of these epoxy resins may be used in a mixture.

Examples of the epoxy resin curing agents include imidazole-based curing agents, phenol-based curing agents, thiol-based curing agents, amine-based curing agents, acid anhydride-based curing agents, and organic peroxide-based curing agents, for example. Among them, the epoxy resin curing agent is preferably a latent curing agent having latency. The latent curing agent is preferably a latent curing agent that initiates a curing reaction in response to heat, light, moisture, or pressure as an external stimulus, and is more preferably a microcapsule-type curing agent. The microcapsule-type curing agent is a curing agent in which a curing agent component which can easily react with an epoxy-based resin is encapsulated into a microcapsule for exhibiting a latent property.

The type of the chemical structure of the latent curing agent is more preferably an imidazole-based curing agent or an amine-based curing agent having latency is more preferable, and is more preferably a dicyandiamide-based curing agent, a ketimine-based curing agent, or an imidazole-based curing agent.

Specific examples of a preferable microcapsule-type curing agent of the present embodiment include a microcapsule-type latent curing agent in which a latent imidazole-modified product is used as a core and the core surface is coated with polyurethane. Commercially available product that can be used are, for example, products of NOVACURE® (NOVACURE is a registered trademark in Japan, other countries, or both) series (manufactured by Asahi Kasei Corporation). In the present embodiment, one epoxy resin curing agent may be used alone, or two or more epoxy resin curing agents may be used in a mixture.

In the present embodiment, the content of the adhesive with respect to the total amount of the adhesive composition (taken to be 100 mass%) is preferably 90 to 100 mass%, more preferably 92 to 100 mass%, and even more preferably 95 to 100 mass%.

In the present embodiment, the adhesive composition may further contain a known organic solvent if necessary. In this case, the content of the solvent with respect to the total amount of the adhesive composition (taken to be 100 mass%) is preferably 0.01 to 10 mass%, and more preferably 0.1 to 5 mass%.

The solvent is appropriately selected according to the adhesive used, and examples thereof include alcohols such as methyl alcohol, ethyl alcohol, n-propyl alcohol, isopropyl alcohol, n-butyl alcohol, t-butyl alcohol, ethylene glycol, and ethylene glycol monomethyl ether; ethers such as tetrahydrofuran and dioxane; esters such as ethyl acetate; ketones such as acetone, methyl ethyl ketone, or cyclohexanone; and amides such as dimethylformamide or N-methyl pyrrolidone. In the present embodiment, one solvent may be used alone, or two or more solvents may be used in a mixture.

In the present embodiment, for example, in the case where an epoxy resin is used as the adhesive, the content of the epoxy resin with respect to the total amount of the adhesive composition (taken to be 100 mass%) is preferably 50 to 99 mass%, more preferably 55 to 95 mass%, and even more preferably 60 to 90 mass%. Further, the content of the epoxy resin curing agent with respect to the total amount of the adhesive composition (taken to be 100 mass%) is preferably 5 to 100 mass%, more preferably 10 to 90 mass%, and even more preferably 20 to 80 mass%.

The adhesive composition in the present embodiment may contain various additives as long as the performance of the present disclosure is not impaired. Examples of the additive include a softener, an anti-aging agent, a stabilizer such as a boric acid ester compound, an adhesion promoter, a leveling agent, a defoamer, a diluent such as an aliphatic monoglycidyl ether, a plasticizer, an inorganic filler, a spacer (such as glass beads), a tackifying resin, fibers, a usable time extender, an antioxidant, a moisture absorbent such as calcium oxide, an ultraviolet absorber, an antihydrolysis agent, an antifungal agent, a thickener, a plasticizer, a colorant such as a pigment, or a filler such as silica, fumed silica, or calcium carbonate. One additive may be used alone or two or more of these may be used in a mixture.

In the present embodiments, there is no particular limitation to a method of providing coating of the adhesive layer 3 on the metal substrate 4, and examples thereof include application methods such as the spin-coating method, extrusion method, gravure coating method, die coating method, slit coating method, bar coating method, spraying method, and applicator methods; printing methods such as the flexographic method; and the hot-melt method in which a adhesive composition formed in the form of a sheet is molten by heating or pressurization, and then the adhesive composition is bonded with the metal substrate 4.

If necessary, the adhesive layer 3 may be dried for the purpose of removing low-molecular compounds such as a solvent. Examples of such a drying method include the natural drying method, the ventilation drying method, the heating drying method, and the vacuum drying method.

In the present embodiment, when the adhesive layer 3 is formed on the metal substrate 4, for the purpose of uniformizing the thickness of the adhesive layer 3, if necessary, a spacer such as glass beads or silica beads may be contained in the adhesive composition, or may be provided on a coating film of the adhesive composition. The size (particle diameter) of the spacer can be appropriately selected according to the thickness of the adhesive layer 3.

In the present embodiment, a preferred aspect of forming the composite material laminate 1 includes a coating step of applying an adhesive composition to at least one surface of the metal substrate, and a curing step of bonding the applied adhesive composition with a foamed body (layer) and curing the adhesive composition at 20 to 250 °C for 0.5 to 900 minutes.

In the coating step, before the adhesive composition is applied to at least one surface of the metal substrate, the surface of the metal substrate may be subjected to a known surface treatment such as blasting treatment or degreasing, if necessary. In addition, the method of coating the adhesive layer on the metal substrate described above can be applied as a method of applying the adhesive composition.

In the curing step, when the foamed body or the foamed body layer (also referred to as a foamed body (layer)) and the applied adhesive composition are bonded to each other, the applied adhesive composition and the foamed body (layer) may be fixed to each other using a jig or a known fixing device (for example, a flat plate and a weight for load distribution) for prevention of misalignment or the like.

Further, the curing conditions of the adhesive composition can be appropriately set depending on the adhesive or the curing agent to be used, and can be cured by curing the adhesive composition adhered to the metal substrate and the foamed body (layer) for 0.5 to 900 minutes under an atmosphere of 20 to 250 °C, for example. In general, when an epoxy resin adhesive and a curing agent are used, a reaction initiates immediately after mixing due to a high reactivity of epoxy groups, and the viscosity starts to increase. As a result, if mixing of the adhesive composition is insufficient, there would be ununiformity of the performance of the adhesive, and after formation of a composite of the metal substrate and the foamed body, the impact resistance would be remarkably lowered starting from a point where the reaction is insufficient. For that reason, examples of the method of preventing initiation of the reaction immediately after mixing to thereby obtaining a stable adhesive layer include a method of changing the curing condition by increasing the temperature or a method of decreasing the rate of the curing reaction by lowering the temperature and prolonging the curing time. In practice, it is desirable to change the curing condition by increasing the temperature. Accordingly, in the present disclosure, a condition of the heat dimensional stability of the foamed body (layer) of 140 °C or higher is preferred.

In the present embodiment, the adhesive layer 3 can be formed by melting a foamed body (layer) by thermal welding. Specifically, as described above, it is preferable that the composite material laminate 1 is a laminate in which the composite material laminate 1 has the metal substrate 4 and the foamed body layer 2 laminated on the surface of the metal substrate 4, and that the adhesive layer 3 provided between the metal substrate 4 and the foamed body layer 2 is a molten foamed body layer in which the foamed body layer 2 in the vicinity of the surface of the metal substrate 4 is a molten.

The thickness of the molten foamed body layer is not specifically limited but is preferably 0.1 mm or more from a viewpoint of achieving the mechanical properties. An impact resistance can be exhibited when the thickness is 0.1 mm or more. Moreover, the thickness of the surface layer is preferably thick from a viewpoint of bending strength and compressive strength, but is preferably 1 mm or less from a viewpoint of weight reduction of the foam molded product.

Note that the thickness of the molten foamed body layer can be determined by the method described in the EXAMPLES section to be described later.

Further, in the present embodiment, the closed cell ratio of the molten foamed body layer is preferably less than 30%, and is preferably 0.1% or more and 20% or less. The method for measuring the closed cell ratio of the foamed body layer 2 described above can be applied as the method for measuring the closed cell ratio of the molten foamed body layer.

[Method of producing composite material laminate]

As described above, the composite material laminate 1 in the present embodiment can be produced by laminating the adhesive layer 3 and the foamed body layer 2 on the metal substrate 4 using a known method. For example, in the method of producing the composite material laminate 1 of the present embodiment, a preliminary heating step of preheating the first resin forming the foamed body used as the foamed body layer 2 may be performed before formation of the foamed body layer 2 on the metal layer 4 or the adhesive layer 3.

More specifically, in the preliminary heating step, the preheating temperature can be adjusted depending on whether the first resin is an amorphous resin or the first resin is a crystalline resin. Specifically, the preliminary heating step is preferably a step of heating at a temperature equal to or higher than the glass transition temperature of the first resin (in the case where the first resin is an amorphous thermoplastic resin) or at a temperature equal to or higher than the melting point temperature of the first resin (in the case where the first resin is a crystalline thermoplastic resin). By implementing the preliminary heating step, a surface part of the foamed body can be melt-fluidized, and a part where the resin molten layer or the molten foamed body layer is to be formed can be selectively heated and softened. Thereafter, a compression and a rapid cooling step of the mold are performed. As a result, it is possible to obtain a composite material laminate 1 in which a relatively smooth layer having a good print clarity is formed in the vicinity of the surface portion of the foamed body layer 2 or the adhesion surface between the foamed body layer and the metal substrate.

In a case in which the first resin used for the foamed body layer is an amorphous resin, the heating temperature of the foamed body in the preliminary heating step is preferably Tg °C or higher and lower than (Tg + 100) °C, and more preferably (Tg + 10) °C or higher and lower than (Tg + 90) °C, where "Tg (°C)" is the glass transition temperature of the resin. If the heating temperature of the foamed body is too low, the fluidity of melted resin is poor and bubbles arising at an obtained design surface are not eliminated, which may result in the design surface of the foamed body (layer) having poor design. Moreover, if the heating temperature of the foamed body is too high, heating reaches as far as the inside of the foamed body layer and contraction occurs during cooling, and thus elastic repulsive force is not obtained during compression and surface smoothness may decrease.

The glass transition temperature of an amorphous resin refers to a value measured by differential scanning calorimetry (DSC) in accordance with JIS K7121. A peak indicating heat absorption that appears in measurement is taken to be a peak indicating melting, and the temperature at a peak indicating heat absorption that appears furthest to the high-temperature side is taken to be the glass transition temperature. The measurement apparatus may be a commercially available differential scanning calorimeter such as a "DSC6220" (product name) produced by SII NanoTechnology Inc.

Note that, in the case where the first resin used for the foamed body layer is an amorphous resin in the present disclosure, the glass transition temperature is measured by the method described in JIS K7121:1987 "Testing Methods for Transition Temperatures of Plastics". However, the sampling method and temperature conditions are as follows. A DSC curve is obtained using a differential scanning calorimeter by loading approximately 6 mg of a sample into an aluminum measurement vessel such that the bottom of the vessel is completely covered, and, under a nitrogen gas flow rate of 20 mL/min, heating the sample from 30 °C to 290 °C (1st heating), holding the sample at 290 °C for 10 minutes, subsequently cooling the sample from 290 °C to 30 °C (cooling), holding the sample at 30 °C for 10 minutes, and subsequently heating the sample from 30 °C to 290 °C (2nd heating). Note that all heating and cooling is performed at a rate of 10 °C/min and that alumina is used as a reference material.

In a case in which the first resin used for the foamed body layer is a crystalline resin, the heating temperature is preferably Tm °C or higher and lower than (Tm + 100) °C, and more preferably (Tm + 10) °C or higher and lower than (Tm + 90) °C, where "Tm (°C)" is the melting point temperature. If the heating temperature of the foamed body (layer) is too low, the fluidity of melted resin is poor and bubbles arising at an obtained design surface are not eliminated, which may result in the foamed body (layer) having poor design. Moreover, if the heating temperature of the foamed body (layer) is too high, heating reaches as far as the inside of the foamed body layer and contraction occurs during cooling, and thus elastic repulsive force is not obtained during compression and surface smoothness may decrease.

In the case the first resin used for the foamed body layer is a crystalline resin, the melting point thereof is measured in the following procedure. A sample of 6 mg of the first resin used for the foamed body layer is collected. A differential scanning calorimeter is used to heat the sample from 30 °C to 290 °C at a heating rate of 10 °C/min and hold the sample at 290 °C for 10 minutes under nitrogen gas flow at a rate of 20 mL/min inside the calorimeter. Thereafter, the sample is promptly removed from the calorimeter and is cooled to 30 °C. Thereafter, the sample is reheated to 290 °C inside the calorimeter at a heating rate of 10 °C/min under nitrogen gas flow at a rate of 20 mL/min, and the melting point (midpoint) is calculated from a DSC curve obtained at this time. Alumina is used as a reference material in the measurement. The differential scanning calorimeter can be a differential scanning calorimeter that is commercially available from SII Nanotechnology Inc. as a "DSC6220" (product name), for example.

"Preferred form of composite material laminate"

In a preferred form of the composite material laminate in the present embodiment, the difference in the transmission loss at 1000 Hz represented by the following Expression (2) is 2 db or more:

$$\text{(Expression 2)}$$
$$\text{Transmission loss of the composite material laminate (B) as a whole -}$$
$$\text{transmission loss of the metal substrate used in the composite material laminate}$$
$$\text{(A)}.$$

When the difference in the transmission loss is 2 db or more, excellent vibration damping effect and sound absorption effect can be expected. The sound absorption performance between 200 to 5000 Hz is mainly achieved through absorption of vibrations of the air in the inside of the cell structure of the foamed body layer. Accordingly, the sound absorption effect increases as the proportion of the transmission loss of the foamed body layer increases.

Further, the difference in the a transmission loss at 1000 Hz represented by the following expression (2) is more preferably 0.1 to 20 db, and even more preferably 1 to 20 db.

Another preferred form of the composite material laminate in the present embodiment is a composite material laminate having a metal substrate, an adhesive layer formed on a surface of the metal substrate, a polyamide resin foamed body layer formed on a surface of the adhesive layer, and a resin molten layer in which the surface of the polyamide resin foamed body layer is molten,

wherein the elastic modulus of the foamed body layer is 20 to 200 MPa, and
the heat dimensional stability (x) of the foamed body layer represented by the following Expression (I) is less than 3%:

$$\text{Heat dimensional stability} = \frac{L_1 - L_0}{L_0} \times 100 \qquad (I)$$

(in the above Expression (I), $L_1$ represents an average thickness ($\mu$m) of the foamed body layer after the foamed body layer is allowed to stand for 30 minutes in an atmosphere of 140 °C, and $L_0$ represents an average thickness ($\mu$m) of the foamed body layer before the foamed body layer is allowed to stand for 30 minutes in the atmosphere of 140 °C).

Two dense layers are disposed on the foamed body layer, i.e., the metal substrate on one side of the foamed body layer and the resin molten layer on the other side. In this manner, by provision of the double-walled structure in which the foamed body layer is sandwiched by the two such dense layers, excellent vibration damping property, impact resistance, and sound absorption effect are exhibited.

Another preferred form of the present embodiment includes a metal substrate, a foamed body layer having a polyamide resin, and a molten foamed body layer which is provided between the metal substrate and the foamed body layer and in which a portion of the foamed body layer is molten,
wherein the shear fracture strength (S) at the interface between the metal substrate and the adhesive layer is 1.0 MPa or more, and (S/F) determined by dividing the shear fracture strength (S) at the interface by the bending elastic modulus (F) of the foamed body layer is 0.007 or more and 0.5 or less.

By having the foamed body layer made of a certain resin (in particular, a polyamide resin) as the main component and using the molten foamed body layer in which a portion of the foamed body layer is molten to be used an adhesive layer, not only more excellent effect on the vibration damping property and the impact resistance is exerted, but also an excellent effect on the vibration damping property and energy absorption in an impact test at 80 °C is exerted.

Note that the main component refers to a component that accounts for more than 50 mass% of the total amount (taken to be 100 mass%) of the foamed body layer.

EXAMPLES

Hereinafter, although embodiments of the present disclosure will be described in further detail with reference to Examples and Comparative Examples, the present disclosure is not limited by these Examples in any way.

1. Methods of measurements and evaluations

The physical properties of a foamed body layer, a metal substrate, an adhesive layer, and a composite material laminate were measured and evaluated based on the following methods.

(1) Bending elastic modulus of foamed body layer

The bending elastic modulus of the foamed body layer can be measured in accordance with JIS K7171(2008). Resin foamed bodies were subjected to a vacuum drying treatment at 40 °C for 24 hours or longer, and specimens (dimensions of the specimen: 300 mm in length, 40 mm in width, and 20 mm in thickness) of the resin foamed bodies (1) to (4) were prepared. The bending elastic modulus (MPa) was measured using Autograph (AG-5000D type) manufactured by Shimadzu Corporation while a load was being applied in the thickness direction.

(2) Average thickness ($L_0$ and $L_1$) and layer thickness

The thicknesses of a foamed body layer, a metal substrate, an adhesive layer, a resin molten layer, and a composite material laminate, the average thickness ($L_1$) (the average thickness ($\mu$m) of the foamed body layer after the foamed body layer was allowed to stand at 140 °C for 30 minutes, and the average thickness ($L_0$) (the average thickness ($\mu$m) of the foamed body layer before the foamed body layer was allowed to stand at 140 °C for 30 minutes) were measured using the following methods.

Each of the foamed body layer, the metal substrate, the adhesive layer, the resin molten layer, and the composite material laminate was cut in the direction perpendicular to the surface, and an image of a resultant cross-section was taken under a microscope (VHX-2000 Keyence Corporation). The cross-section of the foam molded body was analyzed by the length measuring function of analysis software accompanying with the microscope VHX-2000, and the average thicknesses ($L_0$ and $L_1$) and the thickness of each layer were calculated from the respective averages at 10 points.

The cross-sectional shape of expanded particles in the cross-sectional view image was observed, and the boundary between the resin molten layer and the foamed body layer was identified based on the presence or absence of closed cells.

In a measurement of the heat dimensional stability of the foamed body layer, the number average value of results when the foamed body layer was measured six times by a length measurement instrument (caliper) may be used.

(3) Shear fracture strength (S) at interface between metal substrate and adhesive layer

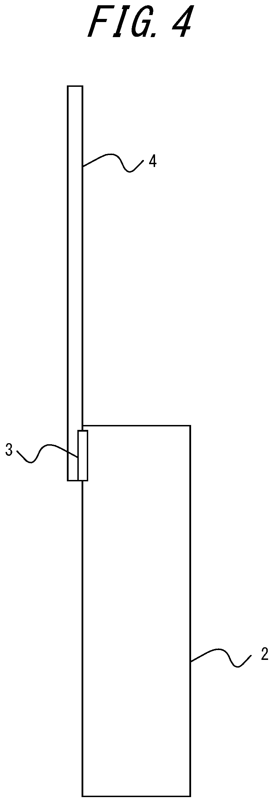

A piece was cut out from each composite material laminate 1 of Examples and each laminate of Comparative Examples to be described later so that the adhesion surface of the metal substrate 4 and the adhesive layer 3 as illustrated in FIG. 4 was obtained, to prepare a test specimen, and the adhesion area was then measured. At this time, the cross-sectional area of the foamed body layer 2 was adjusted to an arbitrary size so as to have an area sufficiently larger than the adhesion area.

Both sides of the test specimen illustrated in FIG. 4 were fixed with a chuck, and a shear load was applied on the adhesion surface using Autograph (AG-5000D) model manufactured by Shimadzu Corporation, to thereby measure the shear fracture strength (S) at the interface between the metal substrate 4 and the adhesive layer 3.

(4) Impact compression test

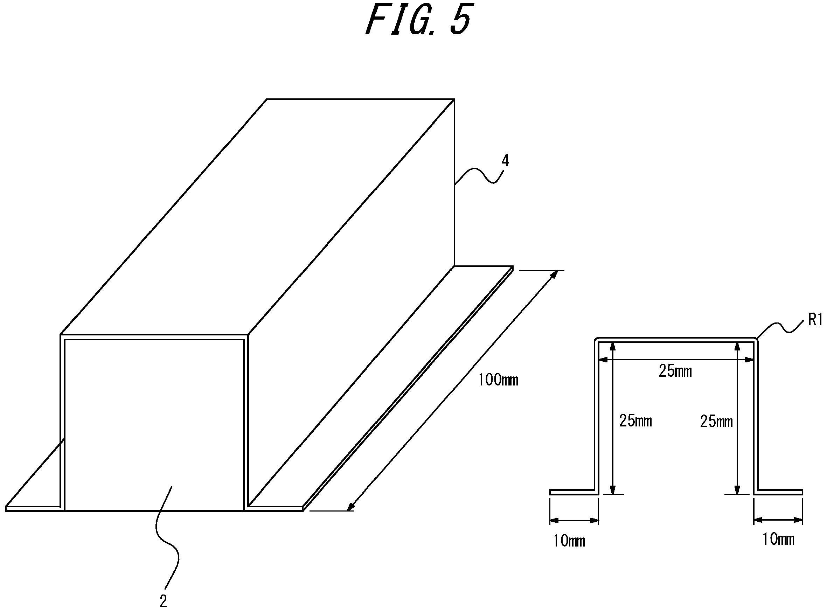

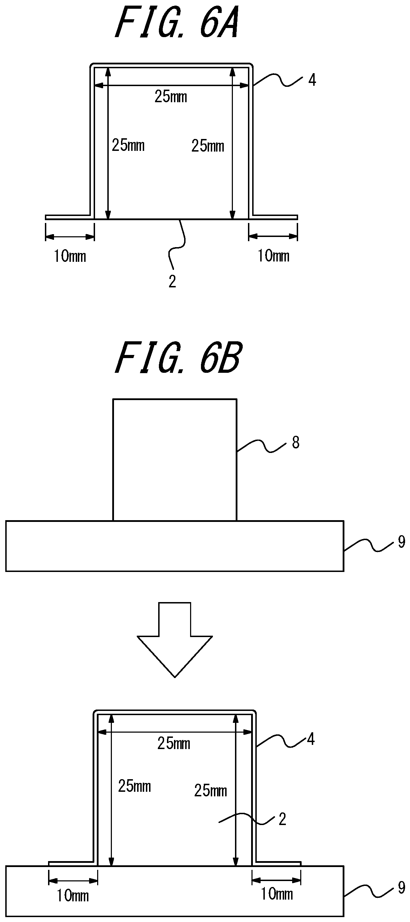

A composite test specimen (100 mm in length) of the metal substrate 4 / the foamed body layer 2 illustrated in the left figure of FIG. 5 was prepared as described in the method for producing each composite material laminate 1 of Example and each laminate of Comparative Example to be described later. Thereafter, an SS curve was obtained using the following procedure (see FIG. 6) and an impact test apparatus under the following conditions. Further, the right drawing of FIG. 5 is a cross-sectional view of the composite test specimen (100 mm in length), and illustrates the dimensions of the metal substrate 4. FIG. 6 is a schematic diagram illustrating a procedure of an impact compression test, wherein FIG. 6A is a cross-sectional view of a composite test specimen (100 mm in length), and FIG. 6B is a schematic diagram illustrating a situation where the impact compression is measured by using a jig 9 with $\phi$ 200 mm in the vertical direction to which a load cell 8 was attached to the upper portion for an impact compression test. More specifically, FIG. 6B is a measurement system in which the load applied to the composite test specimen is detected by the load cell 8 as the repulsive force to the jig 9.

That is, as illustrated in FIG. 6B, the height of the impact compression jig 9 with $\phi$ 200 mm in the vertical direction was adjusted so that the velocity upon an impact was 2 to 6 m/s. An impact compression test was carried out with a drop weight load of 29.4 kg. In addition, the displacement and the load curve were obtained, whereby the impact compression test was performed.

In the impact compression test, a measurement was carried out with IM10T-30 model manufactured by IMATEK (UK). Further, an image indicating the state of peeling off between the metal substrate 4 and the foamed body (layer) 2 was taken with a high-speed CCD camera (5 million pixels, HX-5 manufactured by Nac Image Technology Inc.) which was operated in synchronization with the impact test, and the state of peeling off of the test specimen corresponding to the displaced state was rated according to the following criteria.

Determination criteria for state of peeling off:

$\Delta$: peeling off occurred at a 3% compression
O: peeling off did not did not occur at a 5% compression
◎: peeling off did not occur at a 10% compression

(5) Heat dimensional stability

The heat dimensional stability (%) was measured out according to JIS K6767. Specifically, the average thicknesses ($L_0$ and $L_1$) of foamed body layers (1) to (4) which were prepared by the method described below before and after they were allowed to stand in an oven at 140 °C for 30 minutes were measured using the method described above in (2) using the foamed body layers (1) to (4), and the heat dimensional stability was calculated from the following expression (1).

$$\text{Heat dimensional stability} = \frac{L_1 - L_0}{L_0} \times 100 \qquad (I)$$

(in the above Expression (I), $L_1$ represents the average thickness ($\mu$m) of the foamed body layer after the foamed body layer was allowed to stand at 140 °C for 30 minutes, and $L_0$ represents the average thickness ($\mu$m) of the foamed body layer before the foamed body layer was allowed to stand at 140 °C for 30 minutes.)

(6) Measurement of melting point (Tm) and glass transition temperature (Tg) of foamed body layer

In the case where the first resin used for the foamed body layer was an amorphous resin, the softening point Tg was measured using a differential scanning calorimeter (trade name: DSC7, manufactured by Perkin Elmer Inc.) in accordance with JIS K7121. A sample of 8 mg of the substrate resin was precisely weighed out and used for measurement. The measurement conditions were under a nitrogen environment and as follows. The temperature was held at 30 °C for 3 minutes, raised from 30 °C to 280 °C at a heating rate of 10 °C/min and then held for 3 minutes, decreased to 30 °C at a cooling rate of 10 °C/min and then held for 3 minutes, and raised from 30 °C to 280 °C at a heating rate of 10 °C/min. The temperature (°C) at the peak indicating endotherm appearing on the highest temperature side during the second heating was determined as the softening point Tm of the substrate resin.

In cases where a clear peak was not obtained in the above measurement, such as cases of an amorphous resin, a viscoelastic measurement was performed using a rheometer (trade name: Physica MCR301, manufactured by Anton Paar), and the peak temperature (°C) of the loss tangent (tan $\delta$) was used as the softening point Tg of the substrate resin.

Measurement jig: SRF10
Measurement mode: vibration $\varphi$, $\gamma$
Strain: 0.015%
Frequency: 1 Hz
Temperature: 20 °C to 250 °C
Temperature increasing rate: 2 °C/min

Normal force: -0.3 N
Measurement point: 160
Unit of time: s

In cases where the first resin used for the foamed body layer was a crystalline resin, the melting point (Tm) of the resin used for the foamed body layer was measured in the following procedure. A sample of 6 mg of the resin is collected. A differential scanning calorimeter is used to heat the sample from 30 °C to 290 °C at a heating rate of 10 °C/min and hold the sample at 290 °C for 10 minutes under nitrogen gas flow at a rate of 20 mL/min inside the calorimeter. Thereafter, the sample is promptly removed from the calorimeter and is cooled to 30 °C. Thereafter, the sample is reheated to 290 °C inside the calorimeter at a heating rate of 10 °C/min under nitrogen gas flow at a rate of 20 mL/min, and the melting point (midpoint) is calculated from a DSC curve obtained at this time. Alumina is used as a reference material in the measurement. The differential scanning calorimeter can be a differential scanning calorimeter that is commercially available from SII Nanotechnology Inc. as a "DSC6220" (product name), for example.

(8) Modulus upon a 75% compression

Foam pieces with a size of 20 mm × 20 mm × 20 mm were cut out from the foamed bodies (layers) (1) to (19) to be described below. Then, each cutout test specimen was subjected to a vacuum drying treatment at 40 °C for 24 hours or longer, and then the compressive strength at a 75% compression was measured using Autograph (AG-5000D) model equipped with a thermostatic chamber manufactured by Shimadzu Corporation. At this time, each foamed body layer 2 was heated for 10 minutes or longer in the thermostatic chamber set to a temperature condition of the melting point (Tm) or the glass transition temperature (Tg) of the foamed body layer 2 minus 20 °C. Thereafter, the load upon 15 mm compression of the foamed body layer at 5 mm/min was measured, and the compressive strength upon a 75% compression was calculated.

(9) Vibration damping property

The vibration damping property was evaluated according to JIS G0602. A test specimen was each collected from the composite material laminates of Examples and Comparative Examples prepared as described below, and the loss factor was calculated using the center support regular excitation method. Specifically, a contact tip was attached to the center of the test specimen in a thermostatic chamber (20 °C and 30 °C), and the contact tip was vibrated by an exciter apparatus equipped with an impedance head to generate bending vibrations in the test specimen. A frequency response function within a range of 50 to 2000 Hz was measured, and the loss factors at 20 °C and 30 °C were calculated by the half-width method at the respective resonance points or antiresonance points. Further, an evaluation was made as follows: the average of the loss factors at the measured resonant points of 0.07 or more was rated to be SS, less than 0.07 and 0.04 or more was rated to be S, less than 0.04 and 0.01 or more was rated to be A, and less than 0.01 was rated to be B.

(10) High temperature vibration damping property

The high-temperature vibration damping property was measured in the thermostatic chamber (80 °C) under the same conditions as in (9) above.

(11) Transmission loss

The transmission loss was determined according to JIS A1441-1. The sound insulation properties of each composite material laminate of Examples and Comparative Examples and the cold rolled steel sheet (1) were evaluated by determining the transmission loss at 1000 Hz of a prepared substantially cylindrical sample having a diameter of 41.5 mm by using a vertical incidence sound insulation measurement system model WinZacMTX manufactured by Nihon Onkyo Engineering Co., Ltd. The attenuation amount of sound transmitting through the sample was measured by disposing a sound source on the foamed body layer 2 side and a microphone on the metal surface side (metal substrate 4 side).
Evaluations were made from the respective difference in the sound insulation property of the composite material laminates and the cold rolled steel sheet (1).

(12) External appearance

The surface appearance was evaluated as follows. One surface of the test specimen (b) of 300 mm × 300 mm prepared by a method to be described later was observed. The surface appearance was rated as follows: "excellent: O" when there was no waviness on the surface of the foamed body, "good: Δ" when 10% or less of the area of the entire surface of the foamed body of the area had waviness, or "bad; ×" when 10% or more of the area of the entire surface had waviness.

(13) Closed cell ratio of foamed body layer

$$S\ (\%) = \{(Vx - W/\rho)/(Va - W/\rho)\} \times 100 \qquad \ldots (1)$$

In the formula, Vx is the true volume (cm$^3$) of the foamed body layer, Va is the apparent volume (cm$^3$) of the foamed body layer, W is the weight (g) of the foamed body layer, and ρ is the density (g/cm$^3$) of the substrate resin (first resin) of the foamed body layer. The true volume of the foam is calculated with a pycnometer.
The closed cell ratios of the foamed bodies (layers) (1) to (19) used in Examples were all within a range of 33% to 97%.

(14) Closed cell ratio of molten foamed body layer

After each composite material was cut and a cross-section was polished, cells in the adhesive layer were observed under an SEM.
In the observation of the cross-section, the magnification was adjusted such that the entire thickness direction was observed. The areas of portions observed as cells was identified through an image analysis, and calculated from the area ratio with respect to the entire area.
The closed cell ratios of the molten foamed body layers of Examples 12 to 14 and Examples 17 to 24 were about from 3% to 20%.

(15) High-speed surface impact test

The surface impact absorption energy was determined according to JIS K7221-2. The impact absorption energies at the maximum impact force point of each of the composite material laminates of Examples and Comparative Examples and the cold rolled steel sheet (1) were measured by a high-speed impact tester (HYDRO SHOT HITS-PA10 manufactured by Shimadzu Corporation) (the striker diameter was 20 mm ϕ, the receiving diameter was 40 mm ϕ, and the test speed was 4.4 mm).
The impact absorption energies I and I0 of each of the composite material laminates and the cold rolled steel sheet (1) were measured, and were rated as follows: B when the impact absorption energy ratio expressed by I/I0 was 1 to 1.05, A when the ratio was 1.05 to 1.1, S when the ratio was 1.1 to 1.2, or SS when the ratio was more than 1.2.

(16) Measurement of surface roughness

The surface roughness (Rz) was measured using a dynamic force type scanning probe microscope "SPM-9600 (manufactured by Shimadzu Corporation)". The surface roughness (Rz) was compliant with the maximum height specified in the Japanese Industrial Standard (JIS B 0601:2001, ISO 4287:1997).

(17) Measurement of tensile fracture

A piece of a formed body having a shape of Dumbbell shape type 1 of 120 × 10 × 10t, N = 3 of JIS K6767 was cut out, and a measurement was carried out using Autograph (AG-5000D) model manufactured by Shimadzu Corporation at a velocity of 5 mm/min.

2. Foamed body layer, metal substrate, and adhesive layer used in Examples and Comparative Examples

The materials used in Examples and Comparative Examples were as follows.

"foamed body layer"

(Preparation of foamed body (layer) (1))

Polyamide 6/66 resin (2430A manufactured by DSM and having a surface tension of 46 mN/m at 20 °C, indicated by "PA6/66" in the table) (containing 0.8 mass% of talc) were molten in an extruder, and strands discharged from the extrusion die were pelletized in water to obtain pellets having an average particle size of 1.4 mm. The pellets had a melting point of 193 °C. The resultant pellets were loaded into a pressure vessel at 10 °C. Carbon dioxide gas at 4 MPa was blown into the pellets, and the pellets were left stand for 12 hours so that the gas was absorbed. The pellets containing carbon dioxide gas were then transferred to a foaming apparatus, and the air at 200 °C was blown for 20 seconds to produce aggregates of polyamide expanded particles. The resultant polyamide pre-expanded particles (1a) had an expansion ratio of 4.0 times the cross-section of the solid sphere, an average particle size of 2.2 mm, an average size of closed cells of 0.15 mm, a water content ratio of 1.5%, and a surface-adhesion water ratio of 0%.

The polyamide pre-expanded particles (1) were placed in a bag of a water-permeable nonwoven fabric, immersed in a constant-temperature water bath heated to 50 °C for 30 minutes to obtain water-containing polyamide pre-expanded particles (1b). The polyamide pre-expanded particles (1b) had a water content ratio of 12%, a surface-adhesion water ratio of 7.0%, an average particle size (D1) of 2.3 mm, and an average size (D2) of closed cells of 0.15 mm.

The resultant polyamide pre-expanded particles (1b) were pressure treated by sealing the polyamide pre-expanded particles (1b) in an autoclave, introducing compressed air into the autoclave over 1 hour until the pressure inside the autoclave reached 0.4 MPa, and then maintaining the pressure at 0.4 MPa for 24 hours.

The polyamide pre-expanded particles (1c) subjected to pressure treatment were loaded into the cavity (cavity dimensions: 300 mm in length, 300 mm in width, 30 mm in height) of a mold for in-mold molding and the mold was clamped. The mold was installed in an in-mold foam molding machine.

Thereafter, the polyamide pre-expanded particles (1c) were molded into a foamed body layer (1) by supplying saturated steam at 105 °C into the cavity for 10 seconds, and subsequently supplying saturated steam at 116 °C into the cavity for 30 seconds to cause foaming and thermal fusion of the polyamide pre-expanded particles (1c). Cooling water was supplied into the cavity of the mold to cool the resultant foamed body layer (1). Thereafter, the mold was opened and the polyamide foamed body (layer) (1) was removed. This polyamide foamed body (layer) (1) after being dried had a specific volume of 5.4 (cc/g), and a bending strength of 4.5 MPa. No defect due to insufficient loading of the expanded particles was observed in this foamed body (layer) (1).

(Preparation of foamed body (layer) (2))

Polyamide 6/66 resin (2430A manufactured by DSM and having a surface tension of 46 mN/m at 20 °C, indicated by "PA6/66" in the table) (containing 0.8 mass% of talc) were molten in an extruder, and strands discharged from the profile extrusion die were pelletized in water to obtain pellets having an average particle size of 1.4 mm. The pellets had a melting point of 193 °C. The resultant pellets were loaded into a pressure vessel at 10 °C. Carbon dioxide gas at 4 MPa was blown into the pellets, and the pellets were left stand for 12 hours so that the gas was absorbed. Next, pellets containing carbon dioxide gas were then transferred to a foaming apparatus, and the air at 200 °C was blown in for 20 seconds to obtain an assembly of polyamide pre-expanded particles (2a). The resultant polyamide pre-expanded particles (2a) had an expansion ratio of 3.8 times, an average particle size of 2.2 mm, an average size of closed cells of 0.18 mm, a water content ratio of 1.5%, and a surface-adhesion water ratio of 0%.

The polyamide pre-expanded particles (2a) were placed in a bag of a water-permeable nonwoven fabric, immersed in a constant-temperature water bath heated to 50 °C for 5 minutes, and then subjected to a dehydration treatment in a dehydrator at 1000 rpm/min for 3 minutes to obtain water-containing polyamide pre-expanded particles (2b). The polyamide pre-expanded particles (2b) had a water content ratio of 9.5%, a surface-adhesion water ratio of 9.0%, an average particle size (D1) of 2.3 mm, and an average size (D2) of closed cells of 0.18 mm.

The resultant polyamide pre-expanded particles (2b) were pressure treated by sealing the polyamide pre-expanded particles (2b) in an autoclave, introducing compressed air into the autoclave over 1 hour until the pressure inside the autoclave reached 0.4 MPa, and then maintaining the pressure at 0.4 MPa for 24 hours.

The polyamide pre-expanded particles (2c) subjected to pressure treatment were loaded into the cavity (cavity dimensions: 300 mm in length, 300 mm in width, 25 mm in height) of a mold for in-mold molding and the mold was clamped. The mold was installed in an in-mold foam molding machine.

Thereafter, the polyamide pre-expanded particles (2c) were molded into a foamed body (layer) (2) by supplying saturated steam at 105 °C into the cavity for 10 seconds, and subsequently supplying saturated steam at 116 °C into the cavity for 30 seconds to cause foaming and thermal fusion of the polyamide pre-expanded particles (2c). Cooling water was supplied into the cavity of the mold to cool the resultant foamed body (layer) (2). Thereafter, the mold was opened and the polyamide foamed body (layer) (2) was removed. This polyamide foamed body (layer) (2) after being dried had a specific volume of 5.2 (cc/g), and a bending strength of 3.8 MPa. No defect due to insufficient loading of the expanded particles was observed in this foamed body (layer) (2). Further, as described above, openings were formed in the foamed body (layer) (2) by pelletizing the strands ejected from the profile extrusion die under water to form the foamed body (layer) (2). The average opening diameter of the openings was 1.1 mm. The depth was 1.2 mm.

(Preparation of foamed body (layer) (3))

After 50 mass% of a polystyrene-based resin (trade name "GP685", manufactured by PS Japan Corporation) and 50 mass% of a polyphenylene ether-based resin (trade name "S201A", manufactured by Asahi Kasei Chemicals Corporation) were heated and melt-kneaded in an extruder, they were extruded to prepare a mixture.

The resultant mixture was placed in a pressure-resistant container of a pre-foamer. The gas in the container was replaced with dry air, and then carbon dioxide (gas) was injected as a blowing agent. The mixture was impregnated with carbon dioxide under the conditions of a pressure of 3.0 MPa and a temperature of 10 °C over 3 hours, and the mixture was pre-foamed under an introduced vapor pressure of 6 kg/cm2G to obtain pre-expanded particles (3a).

The pre-expanded particles (3a) were placed in a pressurization and heating apparatus. The air was then injected as a pressure source, and the pressure was raised to 0.4 MPa under a condition of 23 °C over 4 hours and then kept at 0.4 MPa for 4 hours, to thereby carry out a pressurization treatment. The resultant was filled in a molding die (having inner dimensions of 312 mm × 312 mm × 10 mm) provided with a vapor hole, heated with pressurized steam to cause the pre-expanded particles (3a) to be expanded and fused together, and then cooled and removed from the molding die to obtain a foamed body (layer) (3).

(Preparation of foamed body (layer) (4))

A foamed body (layer) (4) was obtained in the same manner as in the production of the foamed body layer (3) except that the mixing ratio of the resins were changed to 56 mass% of the polystyrene-based resin and 44 mass% of the polyphenylene ether-based resin, and triphenyl phosphate as a flame retardant was used in an amount of 10 parts by mass with respect to 100 parts by mass of the resins.

(Preparation of foamed body (layer) (5))

Polyamide 6/66 resin (2430A manufactured by DSM and having a surface tension of 46 mN/m at 20 °C, indicated by "PA6/66" in the table) (containing 0.8 mass% of talc) were molten in an extruder, and strands discharged from the profile extrusion die were pelletized in water to obtain pellets having an average particle size of 1.4 mm. The pellets had a melting point of 193 °C. The resultant pellets were loaded into a pressure vessel at 10 °C. Carbon dioxide gas at 4 MPa was blown into the pellets, and the pellets were left stand for 12 hours so that the gas was absorbed. Next, pellets containing carbon dioxide gas were then transferred to a foaming apparatus, and the air at 210 °C was blown in for 20 seconds to obtain an assembly of polyamide pre-expanded particles (5a). The resultant polyamide pre-expanded particles (5a) had an expansion ratio of 4.5 times, an average particle size of 2.3 mm, an average size of closed cells of 0.19 mm, a water content ratio of 1.5%, and a surface-adhesion water ratio of 0%.

The polyamide pre-expanded particles (5a) were placed in a bag of a water-permeable nonwoven fabric, immersed in a constant-temperature water bath heated to 50 °C for 5 minutes, and then subjected to a dehydration treatment in a dehydrator at 1000 rpm/min for 3 minutes to obtain water-containing polyamide expanded particles (5b). The polyamide pre-expanded particles (5b) had a water content ratio of 9.5%, a surface-adhesion water ratio of 9.0%, an average particle size (D1) of 2.4 mm, and an average size (D2) of closed cells of 0.19 mm.

The resultant polyamide pre-expanded particles (2b) were pressure treated by sealing the polyamide pre-expanded particles (2b) in an autoclave, introducing compressed air into the autoclave over 1 hour until the pressure inside the autoclave reached 0.4 MPa, and then maintaining the pressure at 0.4 MPa for 24 hours.

The polyamide pre-expanded particles (5c) subjected to pressure treatment were loaded into the cavity (cavity dimensions: 300 mm in length, 300 mm in width, 25 mm in height) of a mold for in-mold molding and the mold was clamped. The mold was installed in an in-mold foam molding machine.

Thereafter, the polyamide pre-expanded particles (5c) were molded into a foamed body layer (5) by supplying saturated steam at 105 °C into the cavity for 10 seconds, and subsequently supplying saturated steam at 116 °C into the cavity for 30 seconds to cause foaming and thermal fusion of the polyamide pre-expanded particles (5c). Cooling water was supplied into the cavity of the mold to cool the resultant foamed body layer (5). Thereafter, the mold was opened and the polyamide foamed body layer (5) was removed. This polyamide foamed body layer (5) after being dried had a specific volume of 6.1 (cc/g), and a bending strength of 3.2 MPa. Further, as described above, openings were formed in the foamed body (layer) (2) by pelletizing the strands ejected from the profile extrusion die under water to form the foamed body (layer) (2). The average opening diameter of the openings was 1.2 mm. The depth was 1.3 mm.

(Preparation of foamed body (layer) (6))

Polyamide 6/66 resin (2430A manufactured by DSM and having a surface tension of 46 mN/m at 20 °C, indicated by "PA6/66" in the table) (containing 0.3 mass% of talc) were molten in an extruder, and strands discharged from the extrusion die were pelletized in water to obtain pellets having an average particle size of 1.4 mm. The pellets had a melting point of 193 °C. The resultant pellets were loaded into a pressure vessel at 10 °C. Carbon dioxide gas at 4 MPa was blown into the pellets, and the pellets were left stand for 12 hours so that the gas was absorbed. The pellets containing carbon dioxide gas were then transferred to a foaming apparatus, and the air at 200 °C was blown for 20 seconds to produce aggregates of polyamide expanded particles. The resultant polyamide pre-expanded particles (6a) had an expansion ratio of 4.0 times the cross-section of the solid sphere, an average particle size of 2.2 mm, an average size of closed cells of 0.25 mm, a water content ratio of 1.5%, and a surface-adhesion water ratio of 0%.

The polyamide pre-expanded particles (6a) were placed in a bag of a water-permeable nonwoven fabric, immersed in a constant-temperature water bath heated to 50 °C for 30 minutes to obtain water-containing polyamide pre-expanded particles (6b). The polyamide pre-expanded particles (6b) had a water content ratio of 12%, a surface-adhesion water ratio of 7.0%, an average particle size (D1) of 2.3 mm, and an average size (D2) of closed cells of 0.25 mm.

The resultant polyamide pre-expanded particles (6b) were pressure treated by sealing the polyamide pre-expanded particles (6b) in an autoclave, introducing compressed air into the autoclave over 1 hour until the pressure inside the autoclave reached 0.4 MPa, and then maintaining the pressure at 0.4 MPa for 24 hours.

The polyamide pre-expanded particles (6c) subjected to pressure treatment were loaded into the cavity (cavity dimensions: 300 mm in length, 300 mm in width, 30 mm in height) of a mold for in-mold molding and the mold was clamped. The mold was installed in an in-mold foam molding machine.

Thereafter, the polyamide pre-expanded particles (6c) were molded into a foamed body layer (6) by supplying saturated steam at 105 °C into the cavity for 10 seconds, and subsequently supplying saturated steam at 116 °C into the cavity for 30 seconds to cause foaming and thermal fusion of the polyamide pre-expanded particles (6c). Cooling water was supplied into the cavity of the mold to cool the resultant foamed body layer (6). Thereafter, the mold was opened and the polyamide foamed body (layer) (6) was removed. This polyamide foamed body (layer) (6) after being dried had a specific volume of 5.4 (cc/g), and a bending strength of 3.8 MPa. No defect due to insufficient loading of the expanded particles was observed in this foamed body (layer) (6).

(Preparation of foamed body (layer) (7))

The polyamide pre-expanded particles (1a) used in the above-described foamed body layer) (1) were placed in a bag of a water-permeable nonwoven fabric, immersed in a constant-temperature water bath heated to 50 °C for 30 minutes to obtain water-containing polyamide pre-expanded particles (1b). The polyamide pre-expanded particles (b) had a water content ratio of 12%, a surface-adhesion water ratio of 7.0%, an average particle size (D1) of 2.3 mm, and an average size (D2) of closed cells of 0.15 mm.

The resultant polyamide pre-expanded particles (1b) were pressure treated by sealing the polyamide pre-expanded particles (1b) in an autoclave, introducing compressed air into the autoclave over 1 hour until the pressure inside the autoclave reached 0.4 MPa, and then maintaining the pressure at 0.4 MPa for 24 hours.

The polyamide pre-expanded particles (1c) subjected to pressure treatment were loaded into the cavity (cavity dimensions: 300 mm in length, 300 mm in width, 30 mm in height) of a mold for in-mold molding and the mold was clamped. The mold was installed in an in-mold foam molding machine.

Thereafter, the polyamide pre-expanded particles (1c) were molded into a foamed body layer) (7) by supplying saturated steam at 105 °C into the cavity for 10 seconds, and subsequently supplying saturated steam at 112 °C into the cavity for 30 seconds to cause foaming and thermal fusion of the pre-expanded particles (1c). Cooling water was supplied into the cavity of the mold to cool the resultant foamed body layer (7). Thereafter, the mold was opened and the polyamide foamed body (layer) (7) was removed. This polyamide foamed body (layer) (1) after being dried had a specific volume of 5.4 (cc/g), and a bending strength of 4.5 MPa. No defect due to insufficient loading of the expanded particles was observed in this foamed body (layer) (7). The elongation at a tensile fracture measurement was 10%.

(Preparation of foamed body (layer) (8))

The polyamide pre-expanded particles (1a) used in the above-described foamed body layer) (1) were placed in a bag of a water-permeable nonwoven fabric, immersed in a constant-temperature water bath heated to 50 °C for 30 minutes to obtain water-containing polyamide pre-expanded particles (1b). The polyamide pre-expanded particles (1b) had a water content ratio of 12%, a surface-adhesion water ratio of 7.0%, an average particle size (D1) of 2.3 mm, and an average size (D2) of closed cells of 0.15 mm.

The resultant polyamide pre-expanded particles (1b) were pressure treated by sealing the polyamide pre-expanded particles (1b) in an autoclave, introducing compressed air into the autoclave over 1 hour until the pressure inside the autoclave reached 0.2 MPa, and then maintaining the pressure at 0.2 MPa for 24 hours.

The polyamide pre-expanded particles (1c) subjected to pressure treatment were loaded into the cavity (cavity dimensions: 300 mm in length, 300 mm in width, 30 mm in height) of a mold for in-mold molding and the mold was clamped. The mold was installed in an in-mold foam molding machine.

Thereafter, the polyamide pre-expanded particles (1c) were molded into a foamed body layer (8) by supplying saturated steam at 105 °C into the cavity for 10 seconds, and subsequently supplying saturated steam at 112 °C into the cavity for 30 seconds to cause foaming and thermal fusion of the pre-expanded particles (1c). Cooling water was supplied into the cavity of the mold to cool the resultant foamed body layer (8). Thereafter, the mold was opened and the polyamide foamed body (layer) (8) was removed. This polyamide foamed body (layer) (8) after being dried had a specific volume of 5.4 (cc/g), and a bending strength of 4.5 MPa. No defect due to insufficient loading of the expanded particles was observed in this foamed body (layer) (8). The elongation at a tensile fracture measurement was 8%.

(Foamed article (layer) (9))

EPERAN PP (manufactured by Kaneka Corporation, × 15) was used as a foamed body (layer) (9).

(Foamed article (layer) (10))

EPERAN PP (manufactured by Kaneka Corporation, × 30) was used as a foamed body (layer) (10).

(Foamed article (layer) (11))

Eslene Beads (manufactured by Sekisui Chemical Co., Ltd., × 10) were used as a foamed body (layer) (11).

(Preparation of foamed body (layer) (12))

Polyamide 6/66 resin (2430A manufactured by DSM and having a surface tension of 46 mN/m at 20 °C, indicated by "PA6/66" in the table) (containing 3.0 mass% of talc) were molten in an extruder, and strands discharged from the extrusion die were pelletized in water to obtain pellets having an average particle size of 1.4 mm. The pellets had a melting point of 193 °C. The resultant pellets were loaded into a pressure vessel at 10 °C. Carbon dioxide gas at 4 MPa was blown into the pellets, and the pellets were left stand for 12 hours so that the gas was absorbed. The pellets containing carbon dioxide gas were then transferred to a foaming apparatus, and the air at 190 °C was blown for 20 seconds to produce aggregates of polyamide expanded particles. The resultant polyamide pre-expanded particles (12a) had an expansion ratio of 2.4 times the cross-section of the solid sphere, an average particle size of 1.8 mm, an average size of closed cells of 0.12 mm, a water content ratio of 1.5%, and a surface-adhesion water ratio of 0%.

The polyamide pre-expanded particles (12a) were placed in a bag of a water-permeable nonwoven fabric, immersed in a constant-temperature water bath heated to 50 °C for 30 minutes to obtain water-containing polyamide pre-expanded particles (12b). The polyamide pre-expanded particles (12b) had a water content ratio of 12%, a surface-adhesion water ratio of 7.0%, an average particle size (D1) of 1.9 mm, and an average size (D2) of closed cells of 0.12 mm.

The resultant polyamide pre-expanded particles (12b) were pressure treated by sealing the polyamide pre-expanded particles (12b) in an autoclave, introducing compressed air into the autoclave over 1 hour until the pressure inside the autoclave reached 0.4 MPa, and then maintaining the pressure at 0.4 MPa for 24 hours.

The polyamide pre-expanded particles (12c) subjected to pressure treatment were loaded into the cavity (cavity dimensions: 300 mm in length, 300 mm in width, 30 mm in height) of a mold for in-mold molding and the mold was clamped. The mold was installed in an in-mold foam molding machine.

Thereafter, the polyamide pre-expanded particles (12c) were molded into a foamed body layer (12) by supplying saturated steam at 105 °C into the cavity for 10 seconds, and subsequently supplying saturated steam at 116 °C into the cavity for 30 seconds to cause foaming and thermal fusion of the polyamide pre-expanded particles (12c). Cooling water was supplied into the cavity of the mold to cool the resultant foamed body layer (12). Thereafter, the mold was opened and the polyamide foamed body (layer) (12) was removed. This polyamide foamed body (layer) (1) after being dried had a specific volume of 3.5 (cc/g), and a bending strength of 7.0 MPa. No defect due to insufficient loading of the expanded particles was observed in this foamed body (layer) (12).

(Preparation of foamed body (layer) (13))

Polyamide 6/66 resin (2430A manufactured by DSM and having a surface tension of 46 mN/m at 20 °C, indicated by "PA6/66" in the table) (containing 3.0 mass% of talc) were molten in an extruder, and strands discharged from the extrusion die were pelletized in water to obtain pellets having an average particle size of 1.4 mm. The pellets had a melting point of 193 °C. The resultant pellets were loaded into a pressure vessel at 10 °C. Carbon dioxide gas at 4 MPa was blown into the pellets, and the pellets were left stand for 12 hours so that the gas was absorbed. The pellets containing carbon dioxide gas were then transferred to a foaming apparatus, and the air at 190 °C was blown for 20 seconds to produce aggregates of polyamide expanded particles. The resultant polyamide pre-expanded particles (13a) had an expansion ratio of 5.0 times the cross-section of the solid sphere, an average particle size of 2.5 mm, an average size of closed cells of 0.19 mm, a water content ratio of 1.5%, and a surface-adhesion water ratio of 0%.

The polyamide pre-expanded particles (13a) were placed in a bag of a water-permeable nonwoven fabric, immersed in a constant-temperature water bath heated to 50 °C for 30 minutes to obtain water-containing polyamide pre-expanded particles (13b). The polyamide pre-expanded particles (13b) had a water content ratio of 12%, a surface-adhesion water ratio of 7.0%, an average particle size (D1) of 2.6 mm, and an average size (D2) of closed cells of 0.19 mm.

The resultant polyamide pre-expanded particles (13b) were pressure treated by sealing the polyamide pre-expanded particles (13b) in an autoclave, introducing compressed air into the autoclave over 1 hour until the pressure inside the autoclave reached 0.4 MPa, and then maintaining the pressure at 0.4 MPa for 24 hours.

The polyamide pre-expanded particles (13c) subjected to pressure treatment were loaded into the cavity (cavity dimensions: 300 mm in length, 300 mm in width, 30 mm in height) of a mold for in-mold molding and the mold was clamped. The mold was installed in an in-mold foam molding machine.

Thereafter, the polyamide pre-expanded particles (13c) were molded into a foamed body layer (13) by supplying saturated steam at 105 °C into the cavity for 10 seconds, and subsequently supplying saturated steam at 116 °C into the cavity for 30 seconds to cause foaming and thermal fusion of the polyamide pre-expanded particles (13c). Cooling water was supplied into the cavity of the mold to cool the resultant foamed body layer (13). Thereafter, the mold was opened and the polyamide foamed body (layer) (13) was removed. This polyamide foamed body (layer) (13) after being dried had a specific volume of 7.2 (cc/g), and a bending strength of 3.0 MPa. No defect due to insufficient loading of the expanded particles was observed in this foamed body (layer) (13).

(Preparation of foamed body (layer) (14))

After 60 mass% of a polystyrene-based resin (trade name "GP685", manufactured by PS Japan Corporation) and 40 mass% of a polyphenylene ether-based resin (trade name "S201A", manufactured by Asahi Kasei Chemicals Corporation) were heated and melt-kneaded in an extruder, they were extruded to prepare a mixture.

The resultant mixture was placed in a pressure-resistant container of a pre-foamer. The gas in the container was replaced with dry air, and then carbon dioxide (gas) was injected as a blowing agent. The mixture was impregnated with carbon dioxide under the conditions of a pressure of 3.0 MPa and a temperature of 10 °C over 3 hours, and the mixture was pre-foamed under an introduced vapor pressure of 2 kg/cm2G to obtain pre-expanded particles (14a).

The pre-expanded particles (14a) were placed in a pressurization and heating apparatus. The air was then injected as a pressure source, and the pressure was raised to 0.4 MPa under a condition of 23 °C over 4 hours and then kept at 0.4 MPa for 4 hours, to thereby carry out a pressurization treatment. The resultant was filled in a molding die (having inner dimensions of 312 mm × 312 mm × 30 mm) provided with a vapor hole, heated with pressurized steam to cause the pre-expanded particles (14a) to be expanded and fused together, and then cooled and removed from the molding die to obtain a foamed body (layer) (14).

(Preparation of foamed body (layer) (15))

After 60 mass% of a polystyrene-based resin (trade name "GP685", manufactured by PS Japan Corporation) and 40 mass% of a polyphenylene ether-based resin (trade name "S201A", manufactured by Asahi Kasei Chemicals Corporation) were heated and melt-kneaded in an extruder, they were extruded to prepare a mixture.

The resultant mixture was placed in a pressure-resistant container of a pre-foamer. The gas in the container was replaced with dry air, and then carbon dioxide (gas) was injected as a blowing agent. The mixture was impregnated with carbon dioxide under the conditions of a pressure of 3.0 MPa and a temperature of 10 °C over 3 hours, and the mixture was pre-foamed under an introduced vapor pressure of 1.8 kg/cm2G to obtain pre-expanded particles (15a).

The pre-expanded particles (15a) were placed in a pressurization and heating apparatus. The air was then injected as a pressure source, and the pressure was raised to 0.4 MPa under a condition of 23 °C over 4 hours and then kept at 0.4 MPa for 4 hours, to thereby carry out a pressurization treatment. The resultant was filled in a molding die (having inner dimensions of 312 mm × 312 mm × 30 mm) provided with a vapor hole, heated with pressurized steam to cause the pre-expanded particles (15a) to be expanded and fused together, and then cooled and removed from the molding die to obtain a foamed body (layer) (15).

(Preparation of foamed body (layer) (16))

After 60 mass% of a polystyrene-based resin (trade name "GP685", manufactured by PS Japan Corporation) and 40 mass% of a polyphenylene ether-based resin (trade name "S201A", manufactured by Asahi Kasei Chemicals Corporation) were heated and melt-kneaded in an extruder, they were extruded to prepare a mixture.

The resultant mixture was placed in a pressure-resistant container of a pre-foamer. The gas in the container was replaced with dry air, and then carbon dioxide (gas) was injected as a blowing agent. The mixture was impregnated with carbon dioxide under the conditions of a pressure of 3.0 MPa and a temperature of 10 °C over 3 hours, and the mixture was pre-foamed under an introduced vapor pressure of 2.6 kg/cm2G to obtain pre-expanded particles (16a).

The pre-expanded particles (16a) were placed in a pressurization and heating apparatus. The air was then injected as a pressure source, and the pressure was raised to 0.4 MPa under a condition of 23 °C over 4 hours and then kept at 0.4 MPa for 4 hours, to thereby carry out a pressurization treatment. The resultant was filled in a molding die (having inner dimensions of 312 mm × 312 mm × 30 mm) provided with a vapor hole, heated with pressurized steam to cause the pre-expanded particles (16a) to be expanded and fused together, and then cooled and removed from the molding die to obtain a foamed body (layer) (16).

(Preparation of foamed body (layer) (17))

After 60 mass% of a polystyrene-based resin (trade name "GP685", manufactured by PS Japan Corporation) and 40 mass% of a polyphenylene ether-based resin (trade name "S201A", manufactured by Asahi Kasei Chemicals Corporation) were heated and melt-kneaded in an extruder, they were extruded to prepare a mixture.

The resultant mixture was placed in a pressure-resistant container of a pre-foamer. The gas in the container was replaced with dry air, and then carbon dioxide (gas) was injected as a blowing agent. The mixture was impregnated with carbon dioxide under the conditions of a pressure of 3.0 MPa and a temperature of 10 °C over 3 hours, and the mixture was pre-foamed under an introduced vapor pressure of 3.7 kg/cm2G to obtain pre-expanded particles (17a).

The pre-expanded particles (17a) were placed in a pressurization and heating apparatus. The air was then injected as a pressure source, and the pressure was raised to 0.4 MPa under a condition of 23 °C over 4 hours and then kept at 0.4 MPa for 4 hours, to thereby carry out a pressurization treatment. The resultant was filled in a molding die (having inner dimensions of 312 mm × 312 mm × 30 mm) provided with a vapor hole, heated with pressurized steam to cause the pre-expanded particles (17a) to be expanded and fused together, and then cooled and removed from the molding die to obtain a foamed body (layer) (17).

(Preparation of foamed body (layer) (18))

After 56 mass% of a polystyrene-based resin (trade name "GP685", manufactured by PS Japan Corporation), 44 mass% of a polyphenylene ether-based resin (trade name "S201A", manufactured by Asahi Kasei Chemicals Corporation), and 10 parts by mass of triphenyl phosphate to be used as a flame retardant with respect to 100 parts by mass of the resins were heated and melt-kneaded in an extruder, they were extruded to prepare a mixture.

The resultant mixture was placed in a pressure-resistant container of a pre-foamer. The gas in the container was replaced with dry air, and then carbon dioxide (gas) was injected as a blowing agent. The mixture was impregnated with carbon dioxide under the conditions of a pressure of 3.0 MPa and a temperature of 10 °C over 3 hours, and the mixture was pre-foamed under an introduced vapor pressure of 2.2 kg/cm2G to obtain pre-expanded particles (18a).

The pre-expanded particles (18a) were placed in a pressurization and heating apparatus. The air was then injected as a pressure source, and the pressure was raised to 0.4 MPa under a condition of 23 °C over 4 hours and then kept at 0.4 MPa for 4 hours, to thereby carry out a pressurization treatment. The resultant was filled in a molding die (having inner dimensions of 312 mm × 312 mm × 30 mm) provided with a vapor hole, heated with pressurized steam to cause the pre-expanded particles (18a) to be expanded and fused together, and then cooled and removed from the molding die to obtain a foamed body (layer) (18).

(Preparation of foamed body (layer) (19))

After 56 mass% of a polystyrene-based resin (trade name "GP685", manufactured by PS Japan Corporation), 44 mass% of a polyphenylene ether-based resin (trade name "S201A", manufactured by Asahi Kasei Chemicals Corporation), and 10 parts by mass of triphenyl phosphate resin to be used as a flame retardant with respect to 100 parts by mass of the resins were heated and melt-kneaded in an extruder, they were extruded to prepare a mixture.

The resultant mixture was placed in a pressure-resistant container of a pre-foamer. The gas in the container was replaced with dry air, and then carbon dioxide (gas) was injected as a blowing agent. The mixture was impregnated with carbon dioxide under the conditions of a pressure of 3.0 MPa and a temperature of 10 °C over 3 hours, and the mixture was pre-foamed under an introduced vapor pressure of 3.3 kg/cm2G to obtain pre-expanded particles (19a).

The pre-expanded particles (19a) were placed in a pressurization and heating apparatus. The air was then injected as a pressure source, and the pressure was raised to 0.4 MPa under a condition of 23 °C over 4 hours and then kept at 0.4 MPa for 4 hours, to thereby carry out a pressurization treatment. The resultant was filled in a molding die (having inner dimensions of 312 mm × 312 mm × 30 mm) provided with a vapor hole, heated with pressurized steam to cause the pre-expanded particles (19a) to be expanded and fused together, and then cooled and removed from the molding die to obtain a foamed body (layer) (19).

"Metal substrate"

Cold rolled steel sheet (1): SPCC (thickness: 0.8 mm) JIS G3141)
Metal substrate (1): aluminum A6061 having a thickness of 1 mm and a surface roughness (Rz) of less than 0. 2 μm
Metal substrate (2): aluminum A6061 having a thickness of 1 mm, subjected to a surface treatment (by applying the method described in JP 2011-156764 A), and having a surface roughness (Rz) of 3. 5 μm

"Adhesive layer"

(Adhesive layer (1))

For forming an adhesive layer (1), an adhesive composition (1) was prepared in accordance with the following formulation of the adhesive composition (1). The process for preparing the adhesive composition (1) was as follows. The following components were blended, and were stirred and defoamed under vacuum for 2 minutes with a stirring and defoaming machine HM-400WV (manufactured by KYORITSU SEIKI) to thereby prepare the adhesive composition (1).

Formulation of adhesive composition (1):

Adhesive: 100 parts by mass of bisphenol A type liquid epoxy resin (trade name "DER331", manufactured by Olin Corporation)
Epoxy-based curing agent: 30 parts by mass of a microcapsule type curing agent (a mixture of 2 parts by mass of a bisphenol A type liquid epoxy resin (trade name "HX-3088") manufactured by Asahi Kasei Corporation and 1 part by mass of a latent curing agent obtained by coating an imidazole derivative with a reactant such as an epoxy resin)
Dicyandiamide-based curing agent: 8 parts by mass of dicyandiamide (trade name "DYHARD 100SH", manufactured by AlzChem)
Imidazole-based curing agent: 0 parts by mass of an epoxy-imidazole adduct-based curing agent (trade name "PN-23", manufactured by Ajinomoto Fine-Techno Co., Inc.)
Additive (1): 5 parts by mass of calcium oxide (trade name "QC-X", manufactured by Inoue Calcium Corporation)
Additive (2): 5 parts by mass of surface-treated calcium oxide (trade name "CML-31", manufactured by Omi Chemical Co., Ltd.)
Additive (3): 8 parts by mass of fumed silica treated with polydimethylsiloxane (trade name "TS-720", manufactured by Cabot Japan)
Additive (4): 6 parts by mass of calcium carbonate (trade name "NN#500", manufactured by NITTO FUNKA KOGYO K. K.)
Additive (5): 38 parts by weight of a boric acid ester compound (trade name "L-07N", manufactured by SHIKOKU CHEMICALS CORPORATION)
Additive (6): 3 parts by mass of an aliphatic monoglycidyl ether (trade name "ED-502S", manufactured by ADEKA CORPORATION)

(Adhesive layer (2))

For forming an adhesive layer (2), an adhesive composition (2) was prepared in accordance with the following formulation of the adhesive composition (2). Similar to the process for preparing the adhesive composition (1), the process for preparing the adhesive composition (2) was as follows. The following components were blended, and were stirred and defoamed under vacuum for 2 minutes with a stirring and defoaming machine HM-400WV (manufactured by KYORITSU SEIKI) to thereby prepare the adhesive composition (2).

Formulation of adhesive composition (2):
An epoxy-based adhesive A (SikaPower-1200: Sika Schweiz AG) and an amine-based resin B (SikaPower-1200: Sika Schweiz AG) were used as the adhesive composition (2).

The formulation of the adhesive composition (2) was as follows.

Adhesive: 100 parts by mass of an epoxy-based resin A
Curing agent: 54 parts by mass of an amine-based resin B

(Adhesive layer (3))

An adhesive composition (3) listed in the tables was prepared as follows. After a primer for an instantaneous adhesive TB1797E (ThreeBond 1797E (amine-based compound), manufactured by ThreeBond) was applied on a surface of a foamed body layer and dried, adhesion was performed using ThreeBond 1741 (manufactured by ThreeBond) to thereby prepare the adhesive composition (3).

(Example 1)

The adhesive composition (1) which was obtained by mixing the respective materials as obtained above and agitating and defoaming was applied to a coating thickness of 0.1 mm, and a composite material laminate (1) was produced by the following procedure.

The adhesive composition (1) was applied on the cold rolled steel sheet (1) of 300 mm × 300 mm × 0.8 mm so as to have a target coating thickness. A plurality of glass beads having the same thickness dimension as the target thickness of the adhesive layer were spread thereon, and the foamed body layer (1) of 300 mm × 300 mm was gently placed thereon.

The foamed body layer was processed by machining so as to have the thickness described in the table.

Further, A flat plate and a weight for distributing the load was placed on the foamed body layer (1), and the adhesive composition (1) was cured by treating at a certain temperature for a certain time as summarized in Table 1. At this time, the adhesive composition protruding from the edges was scraped off. In this manner, a composite material laminate having the structure of the cold rolled steel sheet (1) - the adhesive layer (1) - the foamed body layer (1) was prepared. The resultant composite material laminate was processed into pieces with the following sizes, and an impact resistance test, a transmission loss test, and a vibration damping test were performed. The measurement results are listed in Table 1.

Impact resistance test: a test specimen of 60 mm × 60 mm was prepared by cutting.

Transmission loss test: a test specimen with a diameter of 41.5 mm was prepared by cutting.

Vibration damping test: a test specimen with a length of about 285 mm × a width of about 20 mm was prepared by cutting.

(Examples 2 to 11)

Composite material laminates of Examples 2 to 11 were prepared by the similar procedure to that of Example 1 so as to have the layer structures summarized in Tables 1-1 and 1-2 below. Further, the obtained composite material laminates were processed into pieces with the same sizes as those in Example 1, and an impact resistance test, a transmission loss test, and a vibration damping test were performed. The results are listed in Tables 1-1 and 1-2.

(Preparation of surface molten layer)

The obtained 18-mm foamed body (layer) (1) as described above was used to produce a foamed body (layer) (1) having a thickness of 15 mm through compression molding by 3 mm using an apparatus including a normal pressing mechanism and also a heat and cool mold mechanism that included a heating and cooling mechanism and enabled efficient preliminary heating of the foamed body prior to pressurizing compression, such as that disclosed in JP 2015-112827 A.

Note that a hydraulic cylinder compression mechanism or a servomotor compression mechanism was used as a compression mechanism of the apparatus. The foamed body (layer) (1) was set in advance in a mold having a heating mechanism, and heating was performed in a state with the foamed body (layer) (1) in contact with an upper mold and a lower mold. In this heating, the temperature of the upper mold, which was on the side where a design surface was to be formed, was set to 210 °C, and the temperature of the lower mold, which was on the side where a design surface was not to be formed, was set to 100 °C. The heating time was set to 30 seconds.

After the heating, the upper mold was compressed by 10 mm over 40 seconds by a servomotor compression mechanism through 10 compression cycles in which the upper mold was compressed by 1 mm and was then held for 4 seconds.

Cooling was started at the same time when the compression was started, and the mold was opened after 40 seconds, once the mold temperature reached 100 °C, to remove a foamed body (layer) (1) having a surface molten layer (foamed molded article that had been provided with a design surface).

(Comparative Example 1)

Using the foamed body layer (4) obtained as above, a laminate (1) of a comparative example was produced by a procedure similar to that of Examples. The results of the experiments of Examples 1 to 11 and Comparative Example 1 are listed in Tables 1-1 and 1-2 below.

(Example 12)

<Test specimen (1)>

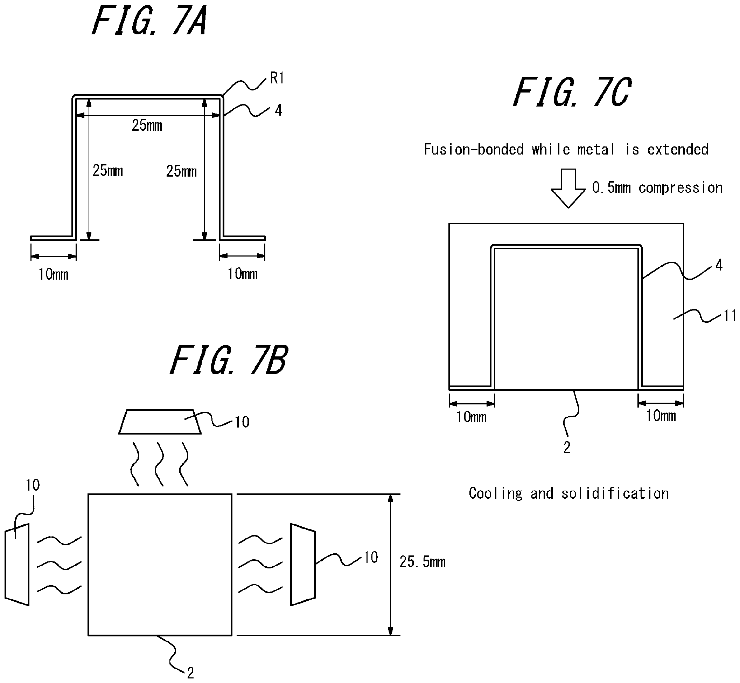

Hereinafter, a composite material laminate (a composite of a foamed body layer, a molten foamed body layer, and a metal substrate) produced in Comparative Example 12 will be described with reference to FIG. 7.
The foamed body (layer) (1) prepared above was cut into a piece of 100 mm × 25.5 mm × 26 mm to be used as the foamed body layer 2. Further, a metal substrate 4 having the dimensions illustrated in FIG. 7A (metal substrate (2): made of aluminum A6061 and surface-treated by the method of JP 4270444 B) was prepared. Then, as illustrated in FIG. 7B, the surfaces of the cut-out foamed body layer 2 to be adhered with the metal substrate 4 were heated for 1 minute using infrared heater type heaters 10 "Handy Heater HK-2028W (200 V, 2800 W) manufactured by METRO DENKI KOGYO CO., LTD." at positions approximately 5 cm apart from the surfaces (see FIG. 7B, heating by the infrared heater type heaters 10 from three directions). Then, as illustrated in FIG. 7C, the metal substrate 4 (metal substrate (2)) was pressed against the heated foamed body layer 2 while the recessed portion of the metal substrate 4 was extended, and maintained to be compressed with the composite mold 11 having a recessed cross-sectional shape illustrated in FIG. 7C by 0.5 mm, while being subjected to a load of 30 kg per 1 cm$^2$, and then cooled for 3 minutes, to thereby produce a composite material laminate of the foamed body layer 2, the molten foamed body layer, and the metal substrate 4.
A test specimen (1) having the shape illustrated in FIG. 4 or the left diagram of FIG. 5 was cut out from the composite material laminate of the foamed body layer 2, the molten foamed body layer, and the metal substrate 4 obtained above. Then, evaluations summarized in Tables 2-1 and 2-2, such as a shear fracture strength test at the interface and an impact compression test, were performed. As a result of the above-described (4) impact compression test, in the composite material laminate prepared in Example 12, the foamed body layer and the metal substrate peeled off from each other at 11%.

<Preparation of test specimen (2)>

Further, for performing an impact resistance test (impact resistance (impact energy absorption ratio) of a composite material laminate) and a vibration damping test (vibration damping property of the composite material laminate), a composite material laminate was separately prepared by the following method.
The foamed body (layer) (1) was cut into a piece of 300 mm × 300 mm × 25.5 mm. Then, the surface (one side) of the cut-out foamed body layer (1) to be adhered with the metal substrate was heated for 1 minute using an infrared heater type heater "Handy Heater HK-2028W (200 V, 2800 W) manufactured by METRO DENKI KOGYO CO., LTD." at a position approximately 5 cm away from the surface. Thereafter, a metal substrate of 300 mm × 300 mm × 1 mm (metal substrate (2): made of aluminum A6061 and surface-treated by the method of JP 4270444 B) was pressed against the foamed body layer (1), maintained to be compressed by 0.5 mm, while being subjected to a load of 30 kg per 1 cm$^2$, and then cooled for 3 minutes, to thereby produce a composite material laminate of the foamed body layer, the molten foamed body layer, and the metal substrate.
Impact resistance test: a test specimen of 60 mm × 60 mm was prepared by cutting.
Vibration damping test: a test specimen with a length of about 285 mm × a width of about 20 mm was prepared by cutting.
An impact resistance test (impact resistance (impact energy absorption ratio) of the composite material laminate) and a vibration damping test were performed on the above-described test specimens (2) that had been processed by cutting.

(Examples 13 to 14)

A composite material laminate of Example 13 and Example 14 (a composite of a foamed body layer, a molten foamed body layer, and a metal substrate) was prepared in the same manner as in Example 12 except that the material of the foamed body layer used was changed to the formulation summarized in Table 3. Evaluations summarized in Tables 2-1 and 2-2 were performed.

(Example 15)

<Preparation of test specimen (1)>

Hereinafter, a composite material laminate produced in Example 15 will be described by using a part of FIG. 7 (FIGS. 7A and 7C).

The foamed body (layer) (9) prepared above was cut into a piece of 100 mm × 25 mm × 25 mm to be used as the foamed body layer 2. In addition, a metal substrate 4 (metal substrate (1): made of an aluminum A6061, not subjected to a surface treatment) having the dimensions illustrated in FIG. 7A was prepared. The primer of the adhesive composition (3) was then applied to the foamed body layer (9).

Thereafter, the adhesive composition (3) was applied on the surface of the metal substrate 4 so as to have a target coating thickness. A plurality of glass beads having the same thickness dimension as the target thickness of the adhesive layer 3 were spread on the coated surface of the adhesive composition (3). The adhesive composition (3) was cured by processing at a certain temperature for a certain time (23 °C, 24 hours) described in Table 1 in the composite molding die 11 with the shape illustrated in FIG. 7C while being subjected to a load of 30 kg on the foamed body layer (9). At this time, the adhesive composition (3) protruding from the edge was scraped off. In this manner, a composite material laminate having the structure of the metal substrate (1) - the adhesive layer (3) - the foamed body layer (9) was prepared. A test specimen (1) having the shape illustrated in FIG. 4 or the left figure of FIG. 5 was cut out from the obtained composite material laminate having the structure of the metal substrate (1) - the adhesive layer (3) - the foamed body layer (9). Then, evaluations summarized in Tables 2-1 and 2-2, such as a shear fracture strength test at the interface and an impact compression test, were performed. As a result of the above-described (4) impact compression test, the composite material laminate prepared in Comparative Example 15 peeled off at 12%.

<Preparation of test specimen (2)>

Further, for performing an impact resistance test and a vibration damping test, a composite material laminate was separately prepared by the following method.

The foamed body (layer) (9) was cut into a piece of 300 mm × 300 mm × 25.5 mm. Thereafter, a metal substrate of 300 mm × 300 mm × 1 mm (metal substrate (1): made of aluminum A6061, not subjected to a surface treatment) was prepared. The primer of the adhesive composition (3) was then applied to the foamed body layer (9).

Thereafter, the adhesive composition (3) was applied on the surface of the metal substrate of 300 mm × 300 mm × 1 mm so as to have a target coating thickness. A plurality of glass beads having the same thickness dimension as the target thickness of the adhesive layer 3 were spread on the coated surface of the adhesive composition (3). The adhesive composition (3) was cured by processing at a certain temperature for a certain time (23 °C, 24 hours) described in Table 1 in a molding die while being subjected to a load of 30 kg on the foamed body layer (9). At this time, the adhesive composition (3) protruding from the edge was scraped off. In this manner, a composite material laminate having the structure of the metal substrate (1) - the adhesive layer (3) - the foamed body layer (9) was prepared.

Impact resistance test: a test specimen of 60 mm × 60 mm was prepared by cutting.

Vibration damping test: a test specimen with a length of about 285 mm × a width of about 20 mm was prepared by cutting.

An impact test and a vibration damping test were performed on the above-described test specimens (2) that had been processed by cutting.

(Example 16)

<Preparation of test specimen (1)>

Hereinafter, a composite material laminate produced in Example 16 will be described by using a part of FIG. 7 (FIGS. 7A and 7C).

The foamed body (layer) (10) prepared above was cut into a piece of 100 mm × 25 m × 25 mm to be used as the foamed body layer 2. In addition, a metal substrate 4 (metal substrate (1): made of an aluminum A6061, not subjected to a surface treatment) having the dimensions illustrated in FIG. 7A was prepared. The primer of the adhesive composition (3) was then applied to the foamed body layer (10).

Thereafter, the adhesive composition (3) was applied on the surface of the metal substrate 4 so as to have a target coating thickness. A plurality of glass beads having the same thickness dimension as the target thickness of the adhesive layer 3 were spread on the coated surface of the adhesive composition (3). The adhesive composition (3) was cured by processing at a certain temperature for a certain time (23 °C, 24 hours) described in Table 1 in the composite molding die 11 with the shape illustrated in FIG. 7C while being subjected to a load of 30 kg on the foamed body layer 2. At this time, the adhesive composition (3) protruding from the edge was scraped off. In this manner, a composite material laminate having the structure of the metal substrate (1) - the adhesive layer (3) - the foamed body layer (10) was prepared.

A test specimen (1) having the shape illustrated in FIG. 4 or the left figure of FIG. 5 was cut out from the obtained composite material laminate having the structure of the metal substrate (1) - the adhesive layer (3) - the foamed body layer (10). Then, evaluations summarized in Tables 2-1 and 2-2, such as a shear fracture strength test at the interface and an impact compression test, were performed. As a result of the above-described (4) impact compression test, the composite material laminate prepared in Comparative Example 16 peeled off at 12%.

<Preparation of test specimen (2)>

Further, for performing an impact resistance test and a vibration damping test, a composite material laminate was separately prepared by the following method.

The foamed body (layer) (10) was cut into a piece of 300 mm × 300 mm × 25.5 mm. Thereafter, a metal substrate of 300 mm × 300 mm × 1 mm (metal substrate (1): made of aluminum A6061, not subjected to a surface treatment) was prepared. The primer of the adhesive composition (3) was then applied to the foamed body layer (10).

Thereafter, the adhesive composition (3) was applied on the surface of the metal substrate of 300 mm × 300 mm × 1 mm so as to have a target coating thickness. A plurality of glass beads having the same thickness dimension as the target thickness of the adhesive layer 3 were spread on the coated surface of the adhesive composition (3). The adhesive composition (3) was cured by processing at a certain temperature for a certain time (23 °C, 24 hours) described in Table 1 in a molding die while being subjected to a load of 30 kg on the foamed body layer (10). At this time, the adhesive composition (3) protruding from the edge was scraped off. In this manner, a composite material laminate having the structure of the metal substrate (1) - the adhesive layer (3) - the foamed body layer (10) was prepared.

Impact resistance test: a test specimen of 60 mm × 60 mm was prepared by cutting.

Vibration damping test: a test specimen with a length of about 285 mm × a width of about 20 mm was prepared by cutting.

An impact resistance test and a vibration damping test summarized in Table 2 were performed on the test specimens (2) that had been processed by cutting.

(Examples 17 to 24)

A composite material laminate of Example 17 to Example 24 (a composite of a foamed body layer, a molten foamed body layer, and a metal substrate) was prepared in the same manner as in Example 12 except that the material of the foamed body layer 2 used was changed to the formulation summarized in Table 2. Then, evaluations summarized in Table 2 were performed.

(Comparative Example 2)

<Preparation of test specimen (1)>

Hereinafter, a laminate produced in Comparative Example 2 will be described with reference to FIG. 7.

The foamed body layer (1) prepared above was cut into a piece of 100 mm × 25.5 mm × 26 mm to be used as the foamed body layer 2. Further, a metal substrate 4 (metal substrate (1): surface-untreated made of aluminum A6061) having the dimensions illustrated in FIG. 7A was prepared. Then, the surfaces of the foamed body layer (1) to be adhered with the metal substrate 4 were heated for 1 minute using Handy Heater HK-2028W (200 V, 2800 W) manufactured by Metro Electric Industry Co., Ltd. at positions approximately 5 cm apart from the surfaces (see FIG. 7B, heating from three directions by means of infrared ray). Then, the metal substrate 4 (made of A6061, not subjected to surface treatment) was pressed against the heated foamed body layer 2 while the recessed portion of the metal substrate 4 was extended, and maintained to be compressed with the composite mold 11 having the shape illustrated in FIG. 7C by 0.5 mm, while being subjected to a load of 30 kg per 1 cm², and then cooled for 3 minutes, to thereby produce a composite material laminate of the foamed body layer, the molten foamed body layer, and the metal substrate. A test specimen (1) having the shape illustrated in FIG. 4 or the left diagram of FIG. 5 was cut out from the obtained laminate of the foamed body layer, the molten foamed body layer, and the metal substrate. Thereafter, evaluations summarized in Table 2, such as a shear fracture strength test at the interface and an impact compression test, were performed. As a result of the above-described (4) impact compression test, the foamed body layer and the metal substrate in the laminate produced in Comparative Example 2 peeled off from each other at 3% or less.

<Preparation of test specimen (2)>

Further, for performing an impact resistance test and a vibration damping test, test specimens (2) used for the impact resistance test and the vibration damping test were separately prepared in the manner similar to the production method of the test specimen (1) of Comparative Example 2 described above except that the size of the metal substrate was changed to 300 mm $\times$ 300 mm $\times$ 1 mm, and the foamed body layer (1) was cut into a size of 300 mm $\times$ 300 mm $\times$ 25.5 mm.

Impact resistance test: a test specimen of 60 mm $\times$ 60 mm was prepared by cutting.

Vibration damping test: a test specimen with a length of about 285 mm $\times$ a width of about 20 mm was prepared by cutting.

An impact test and a vibration damping test were performed on the above-described test specimens (2) that had been processed by cutting.

(Comparative Example 3)

<Preparation of test specimen (1)>

Hereinafter, a composite material laminate produced in will be described in Example 3 by using a part of FIG. 7 (FIGS. 7A and 7C).

A foamed body (layer) (9) was cut into a piece of 100 mm $\times$ 25.5 mm $\times$ 26 mm to be used as the foamed body layer 2. In addition, a metal substrate 4 having the dimensions illustrated in FIG. 7A (metal substrate (1): made of A6061 and surface-treated by the method of JP 4270444 B) was prepared. Then, the surfaces of the foamed body layer (1) to be adhered with the metal substrate 4 were heated for 30 seconds using Handy Heater HK-2028W (200 V, 2800 W) manufactured by METRO DENKI KOGYO CO., LTD. at positions approximately 5 cm apart from the surfaces (see FIG. 7B, heating from three directions by means of infrared ray). Then, the metal substrate 4 (made of A6061 and subjected to a surface treatment by the method of JP 4270444 B) was pressed against the heated foamed body layer 2 while the recessed portion of the metal substrate 4 was extended, and maintained to be compressed with the composite mold 11 having the shape illustrated in FIG. 7C by 0.5 mm, while being subjected to a load of 30 kg per 1 cm$^2$, and then cooled for 3 minutes, to thereby produce a composite material laminate of the foamed body layer, the molten foamed body layer, and the metal substrate. A test specimen (1) having the shape illustrated in FIG. 4 or the left diagram of FIG. 5 was cut out from the obtained laminate of the foamed body layer, the molten foamed body layer, and the metal substrate. Thereafter, evaluations summarized in Table 2, such as a shear fracture strength test at the interface and an impact compression test, were performed. As a result of the above-described (4) impact compression test, the foamed body layer and the metal substrate in the laminate produced in Comparative Example 3 peeled off from each other at 3% or less.

<Preparation of test specimen (2)>

Further, for performing an impact resistance test and a vibration damping test, test specimens (2) used for the impact resistance test and the vibration damping test were separately prepared in the manner similar to the production method of the test specimen (1) of Comparative Example 3 described above except that the size of the metal substrate was changed to 300 mm $\times$ 300 mm $\times$ 1 mm, and the foamed body layer (9) was cut into a size of 300 mm $\times$ 300 mm $\times$ 25.5 mm.

Impact resistance test: a test specimen of 60 mm $\times$ 60 mm was prepared by cutting.

Vibration damping test: a test specimen with a length of about 285 mm $\times$ a width of about 20 mm was prepared by cutting.

An impact test and a vibration damping test were performed on the above-described test specimens (2) that had been processed by cutting.

(Comparative Example 4)

<Preparation of test specimen (1)>

Hereinafter, a laminate produced in Comparative Example 2 will be described with reference to FIG. 7.

The foamed body layer (15) prepared above was cut into a piece of 100 mm $\times$ 25.5 mm $\times$ 26 mm to be used as the foamed body layer 2. Further, a metal substrate 4 having the dimensions illustrated in FIG. 7A (metal substrate (2): made of aluminum A6061 and surface-treated by the method of JP 4270444 B) was prepared.

Then, the surfaces of the foamed body layer 2 to be adhered with the metal substrate 4 were heated for 1 minute using Handy Heater HK-2028W (200 V, 2800 W) manufactured by METRO DENKI KOGYO CO., LTD. at positions approximately 5 cm apart from the surfaces (see FIG. 7B, hearting from three directions by means of infrared lay). Then, the metal substrate 4 was pressed against the heated foamed body layer 2 while the recessed portion of the metal substrate 4 was extended, and maintained to be compressed with the composite mold 11 having the shape illustrated in FIG. 7C by 0.5 mm, while being subjected to a load of 30 kg per 1 cm$^2$, and then cooled for 3 minutes, to thereby produce a composite material laminate of the foamed body layer, the molten foamed body layer, and the metal substrate. The test specimen (1) having the shape illustrated in FIG. 4 or the left diagram of FIG. 5 was cut out from the obtained laminate. Thereafter, evaluations summarized in Tables 2-1 and 2-2, such as a shear fracture strength test at the interface and an impact compression test, were performed. As a result of the above-described (4) impact compression test, the foamed body layer and the metal substrate in the laminate produced in Comparative Example 4 peeled off from each other at 3% or less.

<Preparation of test specimen (2)>

Further, for performing an impact resistance test and a vibration damping test, test specimens (2) used for the impact resistance test and the vibration damping test were separately prepared in the manner similar to the production method of the test specimen (1) of Comparative Example 4 described above except that the size of the metal substrate was changed to 300 mm × 300 mm × 1 mm, and the foamed body layer (15) was cut into a size of 300 mm × 300 mm × 25.5 mm.
Impact resistance test: a test specimen of 60 mm × 60 mm was prepared by cutting.
Vibration damping test: a test specimen with a length of about 285 mm × a width of about 20 mm was prepared by cutting.
An impact test and a vibration damping test were performed on the above-described test specimens (2) that had been processed by cutting.

Table 1-1

| Table 1-1 | | Example 1 | Example 2 | Example 3 | Example 4 | Example 5 | Example 6 |
|---|---|---|---|---|---|---|---|
| Layer structure of composite laminate | Type of foamed body layer used | Foamed body layer (1) | Foamed body layer (1) | Foamed body layer (1) | Foamed body layer (1) | Foamed body layer (1) | Foamed body layer (2) |
| | Thickness of foamed body layer | 9 mm | 18 mm | 27 mm | 9 mm | 9 mm | 9 mm |
| | Type of adhesive layer used | Adhesive layer composition (1) | Adhesive layer composition (1) | Adhesive layer composition (1) | Adhesive layer composition (2) | Adhesive layer composition (1) | Adhesive layer composition (1) |
| | Type of metal substrate used | Cold rolled steel sheet | Cold rolled steel sheet | Cold rolled steel sheet | Cold rolled steel sheet | Cold rolled steel sheet | Cold rolled steel sheet |
| Production conditions | Adhesion conditions (curing temperature of adhesive layer, thickness of adhesive layer) | 170 °C 15 min | 170 °C 15 min | 170 °C 15 min | 70 °C 120 min | 140 °C 30 min | 170 °C 15 min |
| Values of physical properties | Bending elastic modulus of foamed body layer | 60 MPa | 60 MPa | 60 MPa | 60 MPa | 60 MPa | 30 MPa |
| | S/F | S 8 MPa F60 0.13 | S 8 MPa F60 0.13 | S 8 MPa F60 0.13 | S 6 MPa F60 0.1 | S 6 MPa F60 0.1 | S 4 MPa F30 0.13 |
| | Heat dimensional stability of foamed body layer (%) | 0.1% | 0.1% | 0.1% | 0.1% | 0.1% | 0.1% |
| Results of evaluations | Difference in transmission loss at 1000 Hz | 3 dB | 5 dB | 5 dB | 3 dB | 3 dB | 7 dB |
| | Vibration damping property of composite | SS | SS | SS | SS | SS | S |
| | Impact resistance (impact energy absorption ratio) of composite laminate | SS 1.48 | SS 1.48 | SS 1.48 | A 1.08 | S 1.2 | SS 1.3 |
| | Appearance of composite laminate | ○ | ○ | ○ | ○ | ○ | ○ |

EP 4 159 430 A1

Table 1-2

| Table 1-2 | | Example 7 | Example 8 | Example 9 | Example 10 | Example 11 | Comparative Example 1 |
|---|---|---|---|---|---|---|---|
| Layer structure of composite laminate | Type of foamed body layer used | Foamed body layer (5) | Foamed body layer (3) | Foamed body layer (3) | Foam (layer) with surface molten layer (1) | Foamed body layer (6) | Foamed body layer (4) |
| | Thickness of foamed body layer | 9 mm | 10 mm | 10 mm | 15 mm | 9 mm | 10 mm |
| | Type of adhesive layer used | Adhesive layer composition (1) | Adhesive layer composition (1) | Adhesive layer composition (2) | Adhesive layer composition (1) | Adhesive layer composition (1) | Adhesive layer composition (1) |
| | Type of metal substrate used | Cold rolled steel sheet | Cold rolled steel sheet | Cold rolled steel sheet | Cold rolled steel sheet | Cold rolled steel sheet | Cold rolled steel sheet |
| Production conditions | Adhesion conditions (curing temperature of adhesive layer, thickness of adhesive layer) | 170 °C 15 min | 140 °C 30 min | 70 °C 120 min | 170 °C 15 min | 170 °C 15 min | 170 °C 15 min |
| Values of physical properties | Bending elastic modulus of foamed body layer | 20 MPa | 70 MPa | 70 MPa | 220 MPa | 40 MPa | 70 MPa |
| | S/F | S 4 MPa F20 0.2 | S 3.5 MPa F70 0.05 | S 7 MPa F70 0.1 | S 8 MPa F220 0.04 | S 4 MPa F40 0.1 | S0.2 MPa F70 0.003 |
| | Heat dimensional stability of foamed body layer (%) | 0.1% | 1.5% | 1.5% | 0.1% | 0.3% | 3.2% |
| Results of evaluations | Difference in transmission loss at 1000 Hz | 7 dB | 3 dB | 3 dB | 10 dB | 3 dB | 0 dB |
| | Vibration damping property of composite | A | SS | SS | SS | SS | B |
| | Impact resistance (impact energy absorption ratio) of composite laminate | S 1.15 | S 1.15 | A 1.05 | SS | SS 1.3 | B |
| | Appearance of composite laminate | ○ | △ | ○ | ○ | ○ | × |

Table 2-1

| Table 2-1 | | | Example 12 | Comparative Example 2 | Example 13 | Example 14 | Example 15 | Comparative Example 3 | Example 16 | Example 17 |
|---|---|---|---|---|---|---|---|---|---|---|
| Layer structure of composite laminate | Type of foamed body layer used | | PA | PA | PA (foamed body layer 7) | PA (foamed body layer 8) | PP (foamed body layer 9) | PP (foamed body layer 9) | PP (×30) (foamed body layer) | PPE (BH) (foamed body layer) |
| | Thickness of foamed body layer | | 25 mm | 25 mm | 25 mm | 25 mm | 25 mm | 25 mm | 25 mm | 25 mm |
| | Type of adhesive layer used | | Molten foamed body layer | Molten foamed body layer | Molten foamed body layer | Molten foamed body layer | Adhesive layer composition (3) | Adhesive layer composition (3) | Adhesive layer composition (3) | Molten foamed body layer |
| | Type of metal substrate used | | Metal substrate (2) A6061 with surface treatment | Metal substrate (1) A6061 without surface treatment | Metal substrate (2) A6061 with surface treatment | Metal substrate (2) A6061 with surface treatment | Metal substrate (1) A6061 without surface treatment | Metal substrate (2) A6061 with surface treatment | Metal substrate (1) A6061 without surface treatment | Metal substrate (2) A6061 with surface treatment |
| Production conditions | Adhesion conditions (curing temperature of adhesive layer, thickness of adhesive layer) | | Thermal welding | Thermal welding | Thermal welding | Thermal welding | 23 °C 24 hours | Thermal welding | 23 °C 24 hours | Thermal welding |

| Table 2-1 | | Example 12 | Comparative Example 2 | Example 13 | Example 14 | Example 15 | Comparative Example 3 | Example 16 | Example 17 |
|---|---|---|---|---|---|---|---|---|---|
| Values of physical properties | Heat dimensional stability of foamed body layer (%) | 0.1% | 0.1% | 0.1% | 0.1% | >5% | > 5% | >5% | 1.00% |
| | Strength upon 75% compression (Tm, Tg - 20 °C) (MPa) | 0.5 | 0.5 | 0.4 | 0.4 | 0.1 | 0.1 | 0.1 | 0.5 |
| | Elongation in tensile fracture measurement | 18% | 18% | 10% | 8% | 12% | 12% | 12% | 3.0% |
| | Shear peel strength (S) (MPa) | 6.5 | 0.3 | 6.5 | 6.5 | 4 | 0.1 | 4 | 2.5 |
| | Bending elastic modulus of foamed body layer | 60 | 60 | 60 | 60 | 23 | 23 | 17 MPa | 220 |
| | S/F | 0.11 | 0.005 | 0.11 | 0.11 | 0.17 | 0.004 | 0.24 | 0.011 |
| Results of evaluations | Vibration damping property of composite | SS | B | SS | SS | A | B | A | A |
| | Vibration damping at 80° C is 1.2 times or more that | ○ | ○ | ○ | ○ | × | × | × | ○ |
| | Hat type impact test energy absorption no peeling upon 3% △ no peeling upon 5% 0 no peeling upon 10% ◎ | ◎ 11% | × 1% | ◎ 11% | ○ 8% | ◎ 12% | × 1% | ◎ 12% | △ 4% |
| | Impact resistance (impact energy absorption ratio) of composite laminate | SS | SS | SS | SS | A | A | A | A |

EP 4 159 430 A1

38

Table 2-2

| Table 2-2 | | Example 18 | Example 19 | Example 20 | Example 21 | Example 22 | Example 23 | Example 24 | Comparative Example 4 |
|---|---|---|---|---|---|---|---|---|---|
| Layer structure of composite laminate | Type of foamed body layer used | PPE (BH) (foamed body layer | PPE (BE) (foamed body layer | PPE (BE) (foamed body layer | PA (foamed body layer | PA (foamed body layer | PPE (×3.5) (foamed body layer | PS (foamed body layer | PPE (×3.) (foamed body layer |
| | Thickness of foamed body layer | 25 mm | 25 mm | 25 mm | 25 mm | 25 mm | 25 mm | 25 mm | 25 mm |
| | Type of adhesive layer used | Molten foamed body layer | Molten foamed body layer | Molten foamed body layer | Molten foamed body layer | Molten foamed body layer | Molten foamed body layer | Molten foamed body layer | Molten foamed body layer |
| | Type of metal substrate used | Metal substrate (2) A6062 with surface treatment | Metal substrate (2) A6063 with surface treatment | Metal substrate (2) A6064 with surface treatment | Metal substrate (2) A6065 with surface treatment | Metal substrate (2) A6066 with surface treatment | Metal substrate (2) A6067 with surface treatment | Metal substrate (2) A6068 with surface treatment | Metal substrate (2) A6069 with surface treatment |
| Production conditions | Adhesion conditions (curing temperature of adhesive layer, thickness of adhesive layer) | Thermal welding | Thermal welding | Thermal welding | Thermal welding | Thermal welding | Thermal welding | Thermal welding | Thermal welding |

| Table 2-2 | | Example 18 | Example 19 | Example 20 | Example 21 | Example 22 | Example 23 | Example 24 | Comparative Example 4 |
|---|---|---|---|---|---|---|---|---|---|
| Values of physical properties | Heat dimensional stability of foamed body layer (%) | 1.00% | 2.50% | 2.80% | 0.1% | 0.1% | 1.00% | >5% | >5% |
| | Strength upon 75% compression (Tm, Tg - 20 °C) (MPa) | 0.3 | 0.8 | 0.6 | 1 | 1 | 0.7 | 0.8 | 0.8 |
| | Elongation in tensile fracture measurement | 3.0% | 3.0% | 3.0% | 18.0% | 18.0% | 3.0% | 2.5% | 2.5% |
| | Shear peel strength (S) (MPa) | 1.9 | 2.5 | 1.8 | 6 | 6 | 2.5 | 2.0 | 2.5 |
| | Bending elastic modulus of foamed body layer | 120 | 180 | 100 | 120 | 32 | 330 | 90 | 370 |
| | S/F | 0.016 | 0.014 | 0.018 | 0.05 | 0.19 | 0.0075 | 0.022 | 0.0068 |
| Results of evaluations | Vibration damping property of composite | S | A | S | S | S | A | A | A |
| | Vibration damping at 80° C is 1.2 times or more that | ○ | ○ | ○ | ○ | ○ | ○ | ○ | ○ |
| | Hat type impact test energy absorption no peeling upon 3% △ no peeling upon 5% o no peeling upon 10% ◎ | ○ 6% | △ 4% | ○ 6% | ◎ 15% | ◎ 11% | △ 3% | ○ 6% | × 2% |
| | Impact resistance of composite laminate (Impact energy absorption ratio) | S | A | S | S | S | A | S | B |

EP 4 159 430 A1

INDUSTRIAL APPLICABILITY

The composite material laminate according to the present embodiment can be provided as a structural component that simultaneously has impact resistance and vibration damping property.

Examples of applications for the composite material laminate according to the present embodiment include components for vehicles (automobiles, locomotives, steam locomotives, etc.), aircrafts, and the like for which light weight, design, and rigidity are necessary, and use as a cover that covers a component as an interior material being particularly suitable.

The composite material laminate of the present disclosure can suitably be used as an insulting material, automotive component (for example, an oil pan, an engine cover, a cylinder head cover, other cover shaped components, an intake manifold, an integrated component thereof, a automotive body structure, ducts, an electric devices case, or a battery case), or the like used under high-temperature conditions, such as to exploit the features of the composite material laminate.

REFERENCE SIGNS LIST

| 1 | Composite material laminate |
|---|---|
| 2 | Foamed body layer |
| 3 | Adhesive layer |
| 4 | Metal substrate |
| 5 | Resin molten layer |
| 6 | Opening |
| 7 | Blocked pores |
| 8 | Load cell |
| 9 | Jig for impact compression test ($\varphi$ 200 mm) |
| 10 | Infrared heater type heater |
| 11 | Composite molding die |

**Claims**

1.  A composite material laminate comprising:

    a metal substrate, an adhesive layer formed on a surface of the metal substrate, and a foamed body layer formed on a surface of the adhesive layer,
    wherein a shear fracture strength (S) at an interface between the metal substrate and the adhesive layer is 1.0 MPa or more, and (S/F) determined by dividing the shear fracture strength (S) at the interface by a bending elastic modulus (F) of the foamed body layer is 0.007 or more and 0.5 or less.

2.  The composite material laminate of claim 1, wherein a compressive strength upon a 75% compression at a temperature which is lower than a melting point (Tm) or a glass transition temperature (Tg) of the foamed body layer by 20 °C is 0.3 MPa or more.

3.  The composite material laminate according to claim 1 or 2, wherein the foamed body layer contains a total of 0.5 to 10 mass% of a metal compound with respect to a total amount (100 mass%) of the foamed body layer.

4.  The composite material laminate according to any one of claims 1 to 3, wherein a loss factor between 50 and 2000 Hz in a measurement using a central excitation method at room temperature (23 °C) is 0.05 or more, and a loss factor in a measurement using the central excitation method at 80 °C is 1.2 times or more the loss factor at room temperature within the range of 50 to 2000 Hz.

5.  The composite material laminate according to any one of claims 1 to 4, wherein a bending elastic modulus of the foamed body layers is 20 to 2000 MPa.

6.  The composite material laminate according to any one of claims 1 to 5, wherein an elongation of the foamed body layer in a tensile fracture measurement is 10% or more.

7. The composite material laminate according to any one of claims 1 to 6, wherein
a heat dimensional stability (x) of the foamed body layer represented by the following expression (I) is less than 3%:

$$\text{Heat dimensional stability} = \frac{L_1 - L_0}{L_0} \times 100 \qquad (I)$$

(in the above Expression (I), $L_1$ represents an average thickness ($\mu$m) of the foamed body layer after the foamed body layer is allowed to stand for 30 minutes in an atmosphere of 140 °C, and $L_0$ represents an average thickness ($\mu$m) of the foamed body layer before the foamed body layer is allowed to stand for 30 minutes in the atmosphere of 140 °C).

8. The composite material laminate according to any one of claims 1 to 7, wherein an opening having an average diameter of 1 mm or more and 3 mm or less is provided at the surface of the foamed body layer.

9. The composite material laminate according to any one of claims 1 to 8, wherein
a difference in a transmission loss at 1000 Hz represented by the following expression (2) is 2 db or more:

(Expression 2)

the transmission loss of the composite material laminate (B) as a whole

- the transmission loss of the metal substrate used in the composite material laminate (A).

# FIG. 1

FIG. 2

FIG. 3A

FIG. 3C

FIG. 3B

FIG. 3D

# FIG. 4

# FIG. 5

EP 4 159 430 A1

## FIG. 6A

## FIG. 6B

FIG. 7A

FIG. 7B

FIG. 7C

Fusion-bonded while metal is extended

0. 5mm compression

Cooling and solidification

<table>
<tr><td colspan="2" align="center">**INTERNATIONAL SEARCH REPORT**</td><td>International application No.<br>PCT/JP2021/021092</td></tr>
</table>

**A. CLASSIFICATION OF SUBJECT MATTER**

B32B 5/18(2006.01)i; B32B 15/08(2006.01)i; G10K 11/16(2006.01)i; G10K 11/168(2006.01)i

FI: B32B5/18; B32B15/08 A; G10K11/168; G10K11/16 160; G10K11/16 120

According to International Patent Classification (IPC) or to both national classification and IPC

**B. FIELDS SEARCHED**

Minimum documentation searched (classification system followed by classification symbols)

B32B5/18; B32B15/08; G10K11/16; G10K11/168

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-189587 A (FURUKAWA ELECTRIC CO., LTD.) 29 September 2011 (2011-09-29) claims, paragraphs [0009]-[0043] | 1-9 |
| A | JP 2009-262434 A (NIPPON STEEL CORP.) 12 November 2009 (2009-11-12) paragraphs [0021]-[0100] | 1-9 |
| A | JP 11-263865 A (PARKER CORPORATION, INC.) 28 September 1999 (1999-09-28) paragraphs [0024]-[0075] | 1-9 |
| A | JP 4-179541 A (NIPPON STEEL CORP.) 26 June 1992 (1992-06-26) claims, page 2, upper left column, line 19 to page 3, lower right column, line 5 | 1-9 |

☐ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 August 2021 (16.08.2021) | 24 August 2021 (24.08.2021) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**
Information on patent family members

International application No.

PCT/JP2021/021092

| Patent Documents referred in the Report | Publication Date | Patent Family | Publication Date |
|---|---|---|---|
| JP 2011-189587 A | 29 Sep. 2011 | (Family: none) | |
| JP 2009-262434 A | 12 Nov. 2009 | (Family: none) | |
| JP 11-263865 A | 28 Sep. 1999 | (Family: none) | |
| JP 4-179541 A | 26 Jun. 1992 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016070389 A
- JP H09164541 A
- JP 2011156764 A
- JP 2015112827 A
- JP 4270444 B